Europäisches Patentamt

European Patent Office

Office européen des brevets

(19)

(11) **EP 1 249 133 B1**

(12) **FASCICULE DE BREVET EUROPEEN**

(45) Date de publication et mention
de la délivrance du brevet:
**30.07.2003 Bulletin 2003/31**

(21) Numéro de dépôt: **01942832.5**

(22) Date de dépôt: **15.01.2001**

(51) Int Cl.⁷: **H04N 9/31**

(86) Numéro de dépôt international:
**PCT/FR01/00117**

(87) Numéro de publication internationale:
**WO 01/054419 (26.07.2001 Gazette 2001/30)**

(54) **PROCEDE ET DISPOSITIF DE RESTITUTION D'UN SIGNAL LUMINEUX**

VERFAHREN UND ANORDNUNG ZUR WIEDERHERSTELLUNG EINES LICHTSIGNALS

METHOD AND DEVICE FOR RESTORING A LIGHT SIGNAL

(84) Etats contractants désignés:
**BE DE ES GB IT SE**

(30) Priorité: **17.01.2000 FR 0000515**

(43) Date de publication de la demande:
**16.10.2002 Bulletin 2002/42**

(73) Titulaire: **CENTRE SCIENTIFIQUE ET
TECHNIQUE DU BATIMENT(CSTB)
F-75782 Paris Cédex 16 (FR)**

(72) Inventeurs:
• **DAVID, Laurent
F-44000 Nantes (FR)**

• **CARRE, Samuel
F-44119 Treillières (FR)**

(74) Mandataire: **Verdure, Stéphane
Cabinet Plasseraud,84 Rue d'Amsterdam
75440 Paris Cédex 09 (FR)**

(56) Documents cités:
**EP-A- 0 680 222          US-A- 5 612 753**

• **PATENT ABSTRACTS OF JAPAN vol. 014, no.
345 (P-1083), 26 juillet 1990 (1990-07-26) & JP 02
123344 A (KAWASAKI HEAVY IND LTD), 10 mai
1990 (1990-05-10)**

## Description

La présente invention concerne un procédé de restitution d'un signal lumineux à partir de données numériques définissant au moins une coordonnée colorimétrique du signal lumineux dans un système colorimétrique déterminé, chaque coordonnée colorimétrique étant codée sur N bits de données et correspondant à une valeur de luminance associée à une composante déterminée du signal lumineux dans le système colorimétrique.

Elle se rapporte au domaine de l'imagerie numérique, et s'applique à tout type d'unité numérique de restitution lumineuse. L'invention est décrite ci-après dans son application à une unité numérique de restitution lumineuse fonctionnant par projection optique d'image sur un écran. Une telle unité est appelée vidéo-projecteur. Ce choix n'est cependant pas limitatif, et l'invention peut aussi s'appliquer, notamment, à une unité numérique de restitution lumineuse fonctionnant par affichage sur un écran électronique de type CRT (de l'anglais "Cathode Ray Tube" qui signifie tube cathodique), à cristaux liquides, à plasma, ou autre.

Tout signal lumineux peut être exprimé sous la forme d'un spectre $S(\lambda)$, où $\lambda$ désigne une longueur d'onde, dont les valeurs significatives, dans le domaine visuel, sont comprises globalement entre 380 et 780 nm (nanomètres). Par traitement numérique, ce spectre est projeté sur un repère colorimétrique propre à un système colorimétrique déterminé. Le plus connu de ces systèmes colorimétriques est le système tri-chromatique Rouge, Vert, Bleu (ci-après système RVB). On obtient ainsi un triplet de coordonnées colorimétriques correspondant à l'expression du signal lumineux dans ledit système colorimétrique déterminé. Ces coordonnées correspondent à des valeurs d'intensité lumineuse respectivement associées à trois composantes chromatiques du signal lumineux, notées R, V et B dans le système RVB. Elles sont codées chacune sur N bits de données, en sorte qu'un triplet est codé sur 3N bits de données. L'invention est décrite ci-après dans son application à une unité numérique de restitution lumineuse fonctionnant selon le système RVB. Ce choix n'est cependant pas limitatif, et l'invention peut aussi s'appliquer, notamment, à une unité numérique de restitution lumineuse fonctionnant selon d'autres systèmes colorimétriques classiques tels que le système XYZ.

Les vidéo-projecteurs qui fonctionnent selon le système RVB (ci-après vidéo-projecteurs RVB) acceptent des données numériques d'entrée définissant, dans le système RVB, les coordonnées colorimétriques du signal lumineux à restituer. Pour une image de dimensions déterminées projetée sur un écran blanc, ils peuvent produire des valeurs de luminance appartenant à un ensemble de valeurs discrètes. On rappelle que la luminance est une grandeur qui caractérise l'intensité lumineuse perçue par le système visuel humain. La luminance est donc liée à l'intensité lumineuse émise par le vidéo-projecteur, dans le rapport de la surface de l'image projetée sur l'écran. Elle se mesure en cd/m$^2$ (candela par mètre carré). Dans le présent exposé, on considère qu'un vidéo-projecteur génère une image de dimensions déterminées sur un écran, par exemple une image de 1 m$^2$, en sorte qu'on parle de valeurs de luminance et non de valeurs d'intensité lumineuse. Dans le cas d'un système colorimétrique tel que le système RVB, la luminance est une grandeur non chromatique additive. Par conséquent, la luminance en un point quelconque d'une image générée à partir d'un vidéo-projecteur RVB est sensiblement égale à la somme des luminances associées à chaque composante R, V et B de ce point.

Pour les vidéo-projecteurs RVB disponibles actuellement, les données numériques d'entrée sont codées sur 24 bits, dont 8 bits pour chaque composante R, V et B. Dit autrement, pour ces vidéo-projecteurs, N vaut huit (N=8). Il est ainsi possible d'obtenir au plus $2^{24}$ soit à peu près 16 500 000 couleurs ou teintes différentes. Chaque coordonnée colorimétrique correspond donc, pour la composante colorimétrique correspondante R, V ou B, à une valeur de luminance comprise dans un ensemble de $2^8 = 256$ valeurs discrètes possibles. Ces valeurs, respectivement notées $L_R$, $L_V$ et $L_B$, sont désignées par un niveau compris entre un niveau minimum 0 (luminance nulle) et un niveau maximum 255 (luminance maximale). La valeur de luminance maximale d'un signal lumineux quelconque est théoriquement obtenue en commandant les trois composantes R, V et B au niveau 255.

On dispose actuellement de vidéo-projecteurs RVB couvrant une dynamique en luminance de 0 à environ 250 cd/m$^2$. En supposant que les composantes R, V et B soient égales (on parle de teintes en niveaux de gris pour désigner les $2^8 = 256$ teintes possibles), un tel vidéo-projecteur présente alors des sauts en luminance sensiblement égaux à 1 cd/m$^2$. De tels sauts en luminance sont suffisamment faibles pour permettre de réaliser des transitions de couleurs qui, pour le système visuel humain, apparaissent comme globalement continues. Cependant, on cherche actuellement à augmenter la dynamique en luminance des vidéo-projecteurs afin d'obtenir des images plus proches de la réalité. On pourrait certes fabriquer des vidéo-projecteurs couvrant une dynamique en luminance plus élevée, par exemple de 0 à environ 25 0000 cd/m$^2$, en les dotant d'une source lumineuse plus puissante. Par contre, cette dynamique plus élevée serait couverte avec des sauts en luminance corrélativement plus élevés, sensiblement égaux à 100 cd/m$^2$, qui ne permettraient plus d'obtenir des transitions de couleurs perçues globalement continues. Il en résulte que, par exemple, l'affichage d'un dégradé de couleur apparaîtrait à l'utilisateur comme une succession de bandes de couleurs discontinues dans le spectre optique. Cet inconvénient est lié à la technologie des cartes vidéo qui sont actuellement utilisées pour et dans les vidéo-projecteurs, et qui traitent des données numériques d'entrée codées sur au plus 8 bits. Or, on ne dispose pas couramment de cartes vidéo traitant des données numériques codées sur un plus grand nombre de bits, ce qui permettrait d'éviter ce problème.

Un but de l'invention est de permettre la restitution d'un signal lumineux avec une dynamique en luminance plus élevée que celle des vidéo-projecteurs actuellement disponibles, sans encourir l'inconvénient précité.

Ce but est atteint, conformément à l'invention grâce à un procédé de restitution lumineuse du type défini en introduction, qui comprend les étapes consistant à :

a) traiter lesdits N bits de données de façon à générer un premier signal lumineux, au moyen d'une première unité de restitution lumineuse qui peut produire des valeurs de luminance dans un premier ensemble de valeurs discrètes couvrant une première dynamique en luminance ;

b) traiter lesdits N bits de données de façon à générer au moins un deuxième signal lumineux, au moyen d'une deuxième unité de restitution lumineuse qui peut produire des valeurs de luminance dans un deuxième ensemble de valeurs discrètes couvrant une deuxième dynamique en luminance, inférieure à ladite première dynamique en luminance, la deuxième unité de restitution lumineuse ayant une résolution en luminance plus fine que la première unité de restitution lumineuse ;

c) générer un troisième signal lumineux obtenu en superposant lesdits premier et deuxième signaux lumineux.

De cette façon, on obtient un signal lumineux résultant (le troisième signal lumineux) qui peut présenter des valeurs de luminance dans un troisième ensemble de valeurs discrètes couvrant sensiblement la première dynamique en luminance avec des sauts en luminance sensiblement égaux à la deuxième valeur de sauts. Si on met en oeuvre deux vidéo-projecteurs acceptant en entrée des données numériques codées sur au plus huit bits, chacun des premier et deuxième signaux lumineux peut avoir une valeur de luminance codée sur au plus huit bits. Il en résulte qu'on peut prévoir que le nombre N de bits codant les coordonnées colorimétriques du signal lumineux soit, au plus, égal à seize (N=16). Ceci revient à augmenter la finesse du codage des coordonnées colorimétriques en contournant la limite imposée par la technologie des cartes vidéo et des vidéo-projecteurs. Bien entendu, le nombre N peut encore être augmenté en mettant en oeuvre d'autres vidéo-projecteurs. L'invention permet donc de générer un signal lumineux avec des valeurs de luminances appartenant à un ensemble de valeurs discrètes couvrant une dynamique en luminance élevée avec des sauts en luminance faibles. Dit autrement, le premier signal lumineux généré à l'étape a) contribue à la dynamique du troisième signal, et le deuxième signal généré à l'étape b) contribue à la finesse des sauts en luminance de ce troisième signal. Le principe de l'invention consiste en une nouvelle application de la propriété qu'a la luminance d'être une grandeur additive.

L'invention propose en outre un dispositif convenant pour la mise en oeuvre du procédé de restitution lumineuse ci-dessus. En effet, elle propose un dispositif de restitution d'un signal lumineux à partir de données numériques définissant au moins une coordonnée colorimétrique du signal lumineux dans un système colorimétrique déterminé, chaque coordonnée colorimétrique étant codée sur N bits de données et correspondant à une valeur de luminance associée à une composante déterminée du signal lumineux dans le système colorimétrique, caractérisé en ce qu'il comporte

- une première unité de restitution lumineuse qui peut produire des valeurs de luminance dans un premier ensemble de valeur discrètes couvrant une première dynamique en luminance;

- au moins une deuxième unité de restitution lumineuse qui peut produire des valeurs de luminance dans un deuxième ensemble de valeurs discrètes couvrant une deuxième dynamique en luminance, inférieure à ladite première dynamique en luminance, avec une résolution en luminance plus fine ;

- des moyens de gestion pour commander lesdites première et deuxième unités de restitution lumineuse en fonction desdits N bits de données de manière à ce qu'elles produisent respectivement un premier et un deuxième signal lumineux, lesdites première et deuxième unités de restitution lumineuse étant en outre agencées pour produire un troisième signal lumineux obtenu en superposant lesdits premier et deuxième signaux lumineux.

D'autres caractéristiques et avantages de l'invention apparaîtront encore à la lecture de la description qui va suivre. Celle-ci est purement illustrative et doit être lue en regard des dessins annexés, sur lesquels on a représenté :

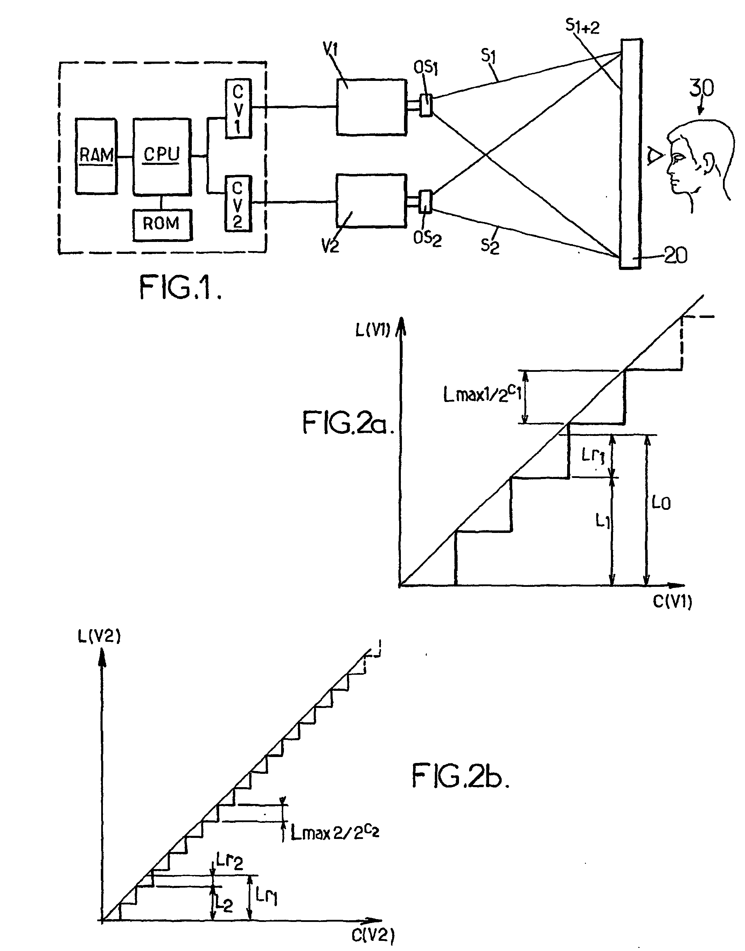

- à la figure 1 : le schéma d'un dispositif selon l'invention dans le cas d'un système colorimétrique en niveaux de gris ;

- aux figures 2a et 2b : des graphiques montrant partiellement la courbe des valeurs de luminances pouvant être produites respectivement par les première et deuxième unité de restitution lumineuse selon l'invention ;

- à la figure 3 : le schéma d'un variante du dispositif de la figure 1 ;

- à la figure 4 : le schéma d'un autre mode de réalisation du dispositif de la figure 1 ;

- à la figure 5 : le schéma le schéma d'un dispositif selon l'invention dans le cas d'un système colorimétrique trichromatique RVB ;

- à la figure 6 : le schéma d'une unité de gestion du dispositif de la figure 5 ;

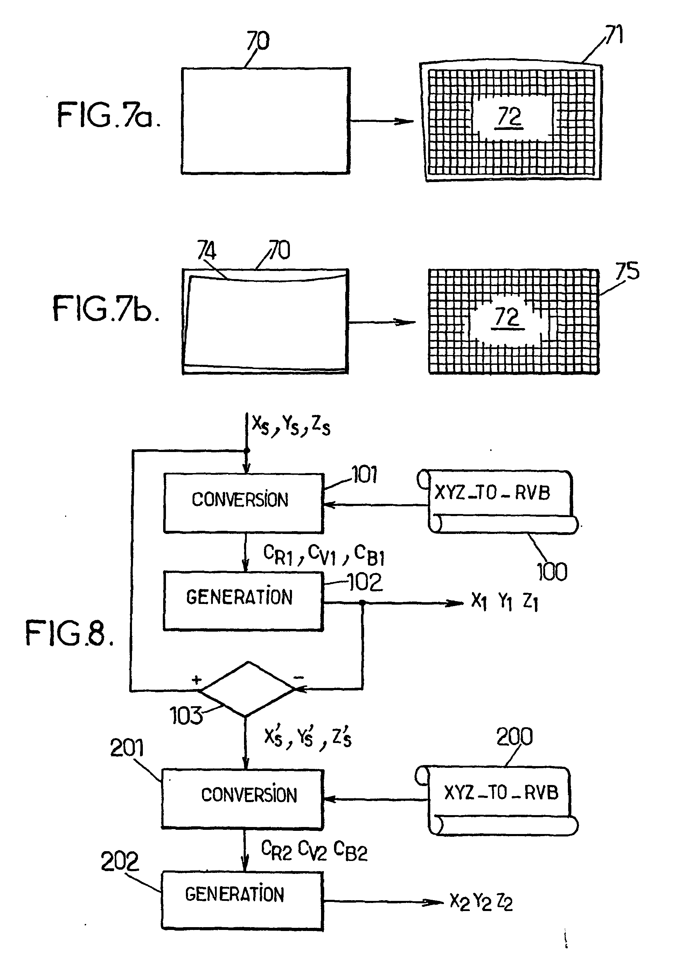

- aux figures 7a et 7b : des schéma illustrant des déformations géométriques d'une image et l'effet de leur correction selon un aspect de l'invention ;
- à la figure 8 : l'organigramme d'une méthode de mise en oeuvre pratique du procédé selon l'invention.

Le principe de l'invention est décrit ci-après en considérant tout d'abord le cas simple d'un système colorimétrique en niveaux de gris. Dans un tel système colorimétrique, un signal lumineux est défini par une et une seule coordonnée colorimétrique qui correspond à une valeur de luminance, notée L0 dans la suite, associée à l'unique composante du signal lumineux dans ce système. On note qu'on passe aisément d'un système tri-chromatique tel que le système RVB à un système en niveaux de gris en appliquant la même commande aux trois composantes R, V et B en sorte qu'elles sont toujours à des niveaux identiques. Par ailleurs, on considère que le comportement du dispositif est linéaire, c'est à dire que des variations de la commande en entrée se traduisent par des variations correspondantes des valeurs de luminance générées.

A la figure 1, un dispositif selon l'invention comprend un premier vidéo-projecteur V1 ayant un flux lumineux maximum déterminé F1 et au moins un deuxième vidéo-projecteur V2 ayant un flux lumineux maximum déterminé F2, tel que F2 vaut F1/K, où K est un nombre supérieur à l'unité. Préférentiellement, le rapport K entre le flux F1 et le flux F2 est une puissance entière de deux, c'est à dire que $K=2^q$, où q est un nombre entier. Dans un exemple, K=256, et donc q=8. A la figure 1, le vidéo-projecteur V2 est représenté schématiquement plus petit que le vidéo-projecteur V1 afin de rendre compte de la différence entre leurs flux lumineux maximums respectifs.

Le vidéo-projecteur V1 permet de générer, sur un écran 20, une valeur de luminance maximale égale à $Lmax_1$. Le vidéo-projecteur V2 permet de générer, sur l'écran 20, une valeur de luminance maximale égale à $Lmax_2$. Bien entendu, ces valeurs maximales dépendent de la surface de l'image qu'ils génèrent sur l'écran 20. Celle-ci est fonction de la distance entre l'optique de sortie $OS_1$ et $OS_2$ des vidéo-projecteurs respectivement V1 et V2 d'une part et l'écran 20 d'autre part, ainsi que du réglage du grossissement introduit par leurs optiques de sortie $OS_1$ et $OS_2$. Avec un écran 20 fonctionnant en transmission, l'utilisateur 30 se place du côté de l'écran opposé aux vidéo-projecteurs V1 et V2. L'écran 20 est de préférence du type "lentille de Fresnel", présentant un bon rendement en luminance et une bonne uniformité en luminance pour une position de l'observateur donnée. Dans l'hypothèse d'un dispositif entièrement linéaire, les valeurs maximales de luminance que peuvent générer les deux vidéo-projecteurs se situent dans le même rapport de proportionnalité que leurs flux lumineux maximum. Dit autrement, $Lmax_2$ vaut sensiblement $Lmax_1/K$. Les vidéo-projecteurs V1 et V2 sont couplés chacun à la sortie d'une carte vidéo, respectivement CV1 et CV2. Ces cartes vidéo sont ici comprises dans une unité de gestion 10. Celle-ci comprend en outre une unité centrale de calcul CPU reliée à une mémoire RAM du type d'une mémoire vive à accès aléatoire, ainsi éventuellement qu'à une mémoire ROM du type d'une mémoire à lecture seule.

L'unité CPU délivre des données numériques codées sur N bits de données répartis en au moins deux groupes de $c_1$ et $c_2$ bits respectivement, où $c_1$ et $c_2$ sont des nombres tels que $N=c_1+c_2$. Ces deux groupes de bits correspondent à des commandes C(V1) et C(V2) des unités de restitution lumineuse respectivement V1 et V2. Ces données commandes sont transmises en entrée des cartes vidéo CV1 et CV2. De manière classique, les cartes vidéo traitent des données numériques codées au plus sur 8 bits. Donc, dans un exemple, on considère que N vaut seize, et que $c_1$ et $c_2$ valent huit (N=16 ; $c_1=c_2=8$).

Le vidéo-projecteur V1 peut produire des valeurs de luminance dans un premier ensemble de valeurs discrètes couvrant une première dynamique en luminance $0\text{-}Lmax_1$ comprise entre 0 et $Lmax_1$. Dans le cas simple d'une répartition régulière des valeurs de luminance entre 0 et $Lmax_1$, la première dynamique $0\text{-}Lmax_1$ est couverte avec des sauts en luminance constants sur toute la dynamique, ayant une première valeur de sauts qui vaut $Lmax_1/2^{c_1}$. De même le vidéo-projecteur V2 peut produire des valeurs de luminance dans un deuxième ensemble de valeurs discrètes couvrant une dynamique en luminance $0\text{-}Lmax_2$ comprise entre 0 et $Lmax_2$. Dans le cas simple d'une répartition régulière des valeurs de luminance entre 0 et $Lmax_2$, la deuxième dynamique $0\text{-}Lmax_2$ est couverte avec des sauts en luminance constants sur toute la dynamique, ayant une deuxième valeur de sauts qui vaut $Lmax_2/2^{c_2}$. Ces exemple de répartition régulière des valeurs de luminance n'est cependant pas limitative. En effet, la densité de valeurs de luminance peut être variable à l'intérieur de la dynamique couverte. La deuxième dynamique en luminance est inférieure à la première dynamique en luminance. Dit autrement, $Lmax_2$ est inférieur à $Lmax_1$. Par ailleurs, la résolution en luminance de la deuxième unité de restitution lumineuse V2 est plus fine que celle de la première unite de restitution lumineuse V1. Dans le cas de répartitions régulières des valeurs de luminance envisagé ci-dessus, cela signifie que la deuxième valeur de sauts en luminance $Lmax_2/2^{c_2}$ est inférieure à la première valeur de sauts en luminance $Lmax_1/2^{c_1}$. De préférence, la deuxième dynamique en luminance $0\text{-}Lmax_2$ correspond sensiblement à l'intervalle $0\text{-}\Delta L$, où $\Delta L$ est la précision en luminance de la première unité de restitution lumineuse V1, c'est à dire la plus grande différence entre deux valeurs successives dudit premier ensemble de valeurs de luminance. Dans le cas de répartitions régulières des valeurs de luminance envisagé ci-dessus, cela signifie que $\Delta L$ est égal à la première valeur de sauts en luminance $Lmax_1/2^{c_1}$. Dit autrement, $Lmax_2 \approx Lmax_1/2^{c_1}$. Ceci revient à dire que K vaut $2^{c_1}$, c'est à dire que q vaut $c_1$.

La manière dont les vidéo-projecteurs V1 et V2 sont commandés par l'unité de gestion pour restituer un signal lumineux défini par une coordonnée colorimétrique correspondant à une valeur de luminance $L_0$, inférieure à $Lmax_1$, va maintenant être décrite en référence aux graphiques des figures 2a et 2b. Sur ces graphiques, on a représenté partiellement la courbe des valeurs de luminances L(V1) et L(V2) que peuvent produire les vidéo-projecteurs respectivement V1 et V2 en fonction d'une commande respectivement C(V1) et C(V2). Ces valeurs étant discrètes, les courbes des figures 2a et 2b apparaissent comme des fonctions linéaires quantifiées, c'est à dire qu'elles ont une forme "en escalier". Dans le cas de répartitions régulières des valeurs de luminance envisagé ci-dessus, la hauteur des "marches" correspond alors respectivement à la première valeur de sauts en luminance $Lmax_1/2^{c1}$ et à la deuxième valeur de sauts en luminance $Lmax_2/2^{c2}$.

A la figure 2a, on note $L_1$ la valeur de luminance juste inférieure à $L_0$ qui peut être générée par le vidéo-projecteur V1. On note $n_1$ le nombre défini par la partie entière de $L_0/(Lmax_1/2^{c1})$. Dans l'exemple représenté à la figure, $n_1=2$ c'est à dire que $L_1$ correspond au deuxième niveau de luminance non nul que peut produire le vidéo-projecteur V1. On note $Lr_1$ la différence $L_O-L_1$. Cette valeur $Lr_1$ correspond en quelque sorte à l'erreur avec laquelle le vidéo-projecteur V1 permet d'obtenir la valeur de luminance $L_0$ sur l'écran. A la figure 2b, on note $L_2$ la valeur de luminance juste inférieure à $Lr_1$ qui peut être générée par le vidéo-projecteur V2. On note $n_2$ le nombre défini par la partie entière-de $Lr_1/(Lmax_2/2^{c2})$. Dans l'exemple représenté à la figure, $n_2=2$ c'est à dire que $L_2$ correspond au deuxième niveau de luminance non nul que peut produire le vidéo-projecteur V2. On note $Lr_2$ la différence $Lr_1-L_2$. Cette valeur $Lr_2$ correspond en quelque sorte à l'erreur avec laquelle le vidéo-projecteur V2 permet d'obtenir la valeur de luminance $Lr_1$ sur l'écran, c'est à dire, aussi, l'erreur avec laquelle l'ensemble formé des vidéo-projecteurs V1 et V2 permet d'obtenir la valeur de luminance $L_0$ sur l'écran. On notera que la définition de L2 ci-dessus n'est nécessaire qu'en vue de l'adjonction d'un troisième vidéo-projecteur permettant d'obtenir au mieux la valeur de luminance $Lr_2$. Dans le cas où seuls deux vidéo-projecteurs V1 et V2 sont utilisés, L2 peut être définie comme la valeur de luminance la plus proche de $Lr_1$ (inférieure ou supérieure à $Lr_1$) que peut produire le second vidéo-projecteur V2.

Ainsi qu'on l'aura compris, la commande C(V1) générée par l'unité CPU et codée sur $c_1$ bits, est telle que le vidéo-projecteur V1 produise un signal lumineux $S_1$ avec une valeur de luminance égale à $L_1$, alors que la commande C(V2) générée par l'unité CPU et codée sur $c_2$ bits est telle que le vidéo-projecteur V2 produise un signal lumineux $S_2$ ayant une valeur de luminance égale à $L_2$. En superposant les deux signaux lumineux $S_1$ et $S_2$, on génère un troisième signal lumineux $S_{1+2}$ ayant une valeur de luminance égale à $L_1+L_2$, en vertu de la propriété d'additivité de la luminance.

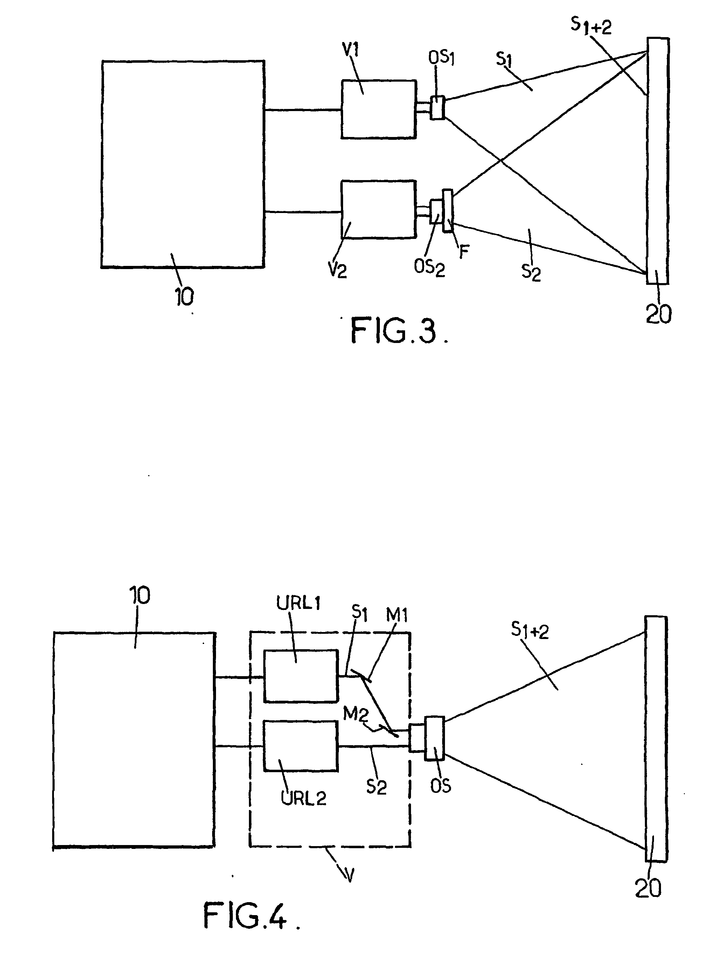

Dans un premier exemple de réalisation conforme à la figure 1, ce résultat est obtenu par projection simultanée des deux signaux lumineux $S_1$ et $S_2$ sur l'écran 20. Dit autrement, le troisième signal lumineux $S_{1+2}$ est obtenu par la superposition optique des signaux lumineux $S_1$ et $S_2$ sur l'écran 20. Bien entendu, il est alors nécessaire que les deux signaux lumineux $S_1$ et $S_2$ coïncident exactement sur l'écran. Or les deux vidéo-projecteurs V1 et V2 ne peuvent avoir le même axe optique. C'est pourquoi leurs optiques de sortie $OS_1$ et $OS_2$ comprennent des moyens pour décentrer l'émission du signal lumineux par rapport à leur axe optique respectif. Ces moyens permettent d'amener les deux signaux lumineux à se superposer exactement sur l'écran 20. Le défaut de calage qui peut subsister entre les deux signaux lumineux projetés peut être traité par logiciel, au sein de l'unité de gestion 10, selon une technique sur laquelle on reviendra plus loin. Ce mode de réalisation est avantageux car il met en oeuvre deux vidéo-projecteurs tels qu'on en dispose actuellement. Selon une variante préférée représentée à la figure 3, il peut s'agir de deux vidéo-projecteurs ayant le même flux lumineux nominal, par exemple au moins égal à 6000 lumen ANSI, dont l'un V2 est couplé à un filtre F pour abaisser son flux lumineux maximum dans un rapport égal à K. A la figure 3, les mêmes éléments qu'à la figure 1 portent les mêmes références. Par ailleurs, et contrairement à la figure 1, le vidéo-projecteur V2 est représenté schématiquement de même taille que le vidéo-projecteur V1 afin de rendre compte de l'égalité de leurs flux lumineux nominaux respectifs. Cette variante est avantageuse car elle met en oeuvre deux vidéo-projecteurs identiques, ce qui facilite le réglage de la superposition des signaux $S_1$ et $S_2$ sur l'écran.

Dans un autre mode de réalisation, la superposition optique des signaux lumineux $S_1$ et $S_2$ est obtenue à l'intérieur d'un vidéo-projecteur, c'est à dire avant le passage à travers l'optique de sortie. Dans ce cas, le vidéo-projecteur est d'un type particulier, représenté schématiquement à la figure 4 sur laquelle il porte la référence V. A la figure 4, les mêmes éléments qu'à la figure 1 et qu'à la figure 3 portent les mêmes références. Le vidéo-projecteur V comprend deux unités de restitution lumineuse URL1 et URL2 générant les premier et deuxième signaux lumineux $S_1$ et $S_2$ respectivement, ainsi que des moyens pour colimater ces deux signaux sur l'optique de sortie OS du vidéo-projecteur. De tels moyens peuvent par exemple être constitués par deux miroirs M1 et M2. Grâce à ces moyens, les signaux lumineux $S_1$ et $S_2$ superposés dans le système optique interne du vidéo-projecteur, c'est à dire avant projection sur l'écran 20 par l'intermédiaire de l'optique de sortie OS. Dit autrement, le troisième signal $S_{1+2}$ est obtenu par la superposition des signaux lumineux $S_1$ et $S_2$ dans le système optique du vidéo-projecteur. Ce mode de réalisation présente l'avantage de ne nécessiter qu'une optique de sortie au lieu de deux dans le mode de réalisation précédent (figures 1 et 3). Cet équipement étant une pièce complexe, qui détermine pour l'essentiel le prix de l'appareil, on pourrait ainsi réaliser une économie substantielle par rapport au mode de réalisation précédent. Néanmoins, il serait alors nécessaire de concevoir un vidéo-projecteur particulier, propre à la mise en oeuvre de l'invention.

On peut montrer que, sous certaines conditions, le procédé de génération d'un signal lumineux par superposition de deux signaux lumineux équivaut à une augmentation de la finesse du codage. En effet, si les valeurs de luminance produites par chaque vidéo-projecteur V1, respectivement V2, couvrent la dynamique 0-$Lmax_1$, respectivement 0-$Lmax_2$, avec des sauts en luminance réguliers, alors il vient :

$$Lr_1 < Lmax_1/2^{c_1} \tag{1}$$

$$Lr_2 < Lmax_2/2^{c_2}$$

Par ailleurs, on rappelle que le rapport des flux lumineux maximum des vidéo-projecteurs V1 et V2 est choisi tel que :

$$Lmax_2 \approx Lmax_1/2^{c_1} \tag{2}$$

De plus, par définition, Lr2 est donné par la relation suivante :

$$Lr_2 = Lr_1 - L_2 \tag{3}$$

Donc les relations (1), (2) et (3) impliquent :

$$Lr2 < (Lmax_1/2^{c_1})/2^{c_2}$$

$$Lr2 < Lmax_1/2^{c_1+c_2} \tag{4}$$

La relation (4) exprime bien le fait que, dans le cadre des hypothèses rappelées ci-dessus, l'erreur avec laquelle le dispositif selon l'invention permet d'obtenir la luminance $L_0$ par la mise en oeuvre d'un unique vidéo-projecteur ayant une dynamique 0-$Lmax_1$ et qui accepterait des données numériques codées sur $N=c_1+c_2$ bits (c'est à dire 16=8+8 bits dans l'exemple). L'invention permet donc de restituer un signal lumineux dont les valeurs de coordonnées colorimétriques ($L_0$ dans l'exemple) sont codées sur au plus seize bits, en n'utilisant que des vidéo-projecteurs acceptant des données numériques d'entrée codées sur au plus huit bits.

En pratique, différentes valeurs du rapport K entre le flux lumineux F1 du vidéo-projecteur V1 et le flux lumineux F2 du vidéo-projecteur V2 peuvent être choisies. Dans l'exposé ci-dessus, la valeur retenue était $K=2^8$ (q=8). Compte tenu des limites du codage sur huit bits des données numériques d'entrée admises par les vidéo-projecteurs actuels, cette valeur donne le meilleur résultat en termes d'amélioration de la finesse du codage des valeurs de coordonnées colorimétriques. Néanmoins, dans certains cas, il peut être judicieux de choisir un rapport moindre. En effet, certains vidéo-projecteurs présentent une qualité d'affichage du noir se dégradant avec la quantité de blanc à afficher dans la même image (contraste maximum), en raison de phénomènes de fuite de lumière dans l'appareil. On parle de voile ou de blanc parasite pour désigner l'effet produit par ces fuites de lumière. Afin de limiter ce phénomène dans le cadre de l'invention, il est possible de minimiser l'emploi du vidéo-projecteur le plus puissant, c'est à dire V1, et d'augmenter l'emploi du vidéo-projecteur le moins puissant, c'est à dire V2. En effet, c'est le premier qui occasionne la dégradation la plus importante de la qualité d'affichage du noir. Pour ce faire, il est possible d'augmenter le flux maximum du vidéo-projecteur le moins puissant, c'est à dire V2, par rapport au flux maximum du vidéo-projecteur le plus puissant, c'est à dire V1. Ainsi par exemple, on choisira un rapport K tel que $K=2^q$ où q est un nombre inférieur à huit (q<8). Ceci permet une amélioration de la qualité d'affichage du noir, mais implique une moins bonne augmentation de la finesse de codage des coordonnées colorimétriques. En effet, avec un rapport $K=2^4=16$ par exemple, les coordonnées colorimétriques sont codées sur 12 bits seulement (N dans le cas général). Plus précisément, la commande C(V1) du vidéo-projecteur le plus puissant V1 est de préférence codée sur $c_1=4$ bits ($c_1=q$ bits dans le cas général), en sorte que la dynamique en luminance 0-$Lmax_1$ de ce vidéo-projecteur est couverte avec des sauts en luminance égaux à $Lmax_1/16$ ($Lmax_1/2^q$ dans le cas général). Dit autrement, les coordonnées colorimétriques du signal lumineux à générer par le vidéo-projecteur le plus puissant V1 sont codées sur $2^q$ bits. La commande C(V2) du vidéo-projecteur le moins puissant V2 est alors codée sur $c_2=8$ bits ($c_2=N$ bits dans le cas général), en sorte que la dynamique en

luminance 0-Lmax$_2$ de ce vidéo-projecteur est couverte avec des sauts en luminance égaux à Lmax$_2$/256 (Lmax$_1$/2$^{N-q}$ dans le cas général). Dit autrement, les coordonnées colorimétriques du signal lumineux à générer par le vidéo-projecteur le moins puissant V2 sont codées sur 2$^{N-q}$ bits.

Ainsi qu'on l'aura compris, l'invention ne se limite pas à la mise en oeuvre de deux unités de restitution lumineuse V1 et V2générant deux signaux lumineux S$_1$ et S$_2$ qui sont superposés. Elle s'applique aussi à la mise en oeuvre d'un nombre quelconque n (où n est un nombre supérieur à l'unité) de telles unités lumineuses Vi, générant chacune un signal lumineux S$_i$ avec une luminance L$_i$, les signaux S$_i$ étant ensuite superposés pour obtenir une luminance résultante égale à

$$\sum_{1\leq i\leq n} Li \; .$$

Si on note Lr$_i$ la différence

$$Lri = L0 - \sum_{1\leq i\leq n} Li \; ,$$

alors on constate que la suite Lr$_i$ tend vers zéro lorsque i tend vers l'infini. Dit autrement, plus le nombre de vidéo-projecteurs mis en oeuvre augmente, et plus petite est l'erreur avec laquelle l'ensemble de ces vidéo-projecteurs permet de restituer une valeur de luminance L$_0$ quelconque.

Le principe de l'invention va maintenant être décrit en considérant le cas d'un système colorimétrique tri-chromatique, tel que le système RVB. Dans un tel système, un signal lumineux est défini par trois composantes chromatiques, notées L$_R$, L$_V$ et L$_B$ dans la suite. En outre, on considère toujours que le comportement du dispositif est linéaire. On notera qu'il est connu des méthodes de restitution d'un signal lumineux défini dans un tel système colorimétrique, consistant à générer trois signaux lumineux, un pour chacune des trois composantes chromatiques, puis à générer un signal lumineux résultant, obtenu par superposition de ces trois signaux lumineux, par exemple sur un écran. Ceci constitue un exemple connu d'application de la propriété qu'a la luminance d'être une grandeur additive.

On considère un signal lumineux à restituer défini par son spectre S($\lambda$). Les commandes C$_R$, C$_V$ et C$_B$ qu'il convient d'appliquer en entrée d'un vidéo-projecteur RVB pour l'affichage de ce signal lumineux se confondent avec les coordonnées colorimétriques respectives, dans le repère du système RVB, du signal à restituer. Par conséquent, elles sont déterminées par les formules suivantes :

$$CR = \int_{\lambda a}^{\lambda b} S(\lambda).\bar{r}(\lambda)\,d\lambda \quad ; \quad CV = \int_{\lambda a}^{\lambda b} S(\lambda).\bar{v}(\lambda)\,d\lambda \quad ; \quad CB = \int_{\lambda a}^{\lambda b} S(\lambda).\bar{b}(\lambda)\,d\lambda$$

où les fonctions $\bar{r}, \bar{v}$, et $\bar{b}$ représentent des courbes génériques ou spécifiques de l'unité de restitution lumineuse utilisée pour restituer chaque composante R, V et B respectivement, et où les valeurs $\lambda a$ et $\lambda b$ sont les limites ad-hoc du spectre S($\lambda$) du signal. Les commandes C$_R$, C$_V$ et C$_B$ sont appliquées en entrée du vidéo-projecteur. Elles provoquent la génération de signaux lumineux correspondant respectivement à chaque composante chromatique du signal à restituer et présentant des valeurs de luminances L$_R$, L$_V$ et L$_B$. Dans l'état de la technique, chacune d'elles est codée au plus sur huit bits, compte tenu de la technologie huit bits des cartes vidéo.

Le procédé visant à l'amélioration de la finesse du codage des coordonnées colorimétrique décrit ci-dessus peut s'appliquer indépendamment à chacune des composantes chromatiques L$_R$, L$_V$ et L$_B$ du signal lumineux. Dans un exemple, le procédé conforme à l'invention consiste alors à générer trois groupes de n signaux lumineux, notés S$_{Ri}$, S$_{Vi}$ et S$_{Bi}$ pour i allant de 1 à n, chaque groupe étant associé à une composante chromatique respective, c'est à dire 3n signaux lumineux au total, puis à générer un signal lumineux résultant, obtenu par la superposition des ces 3n signaux.

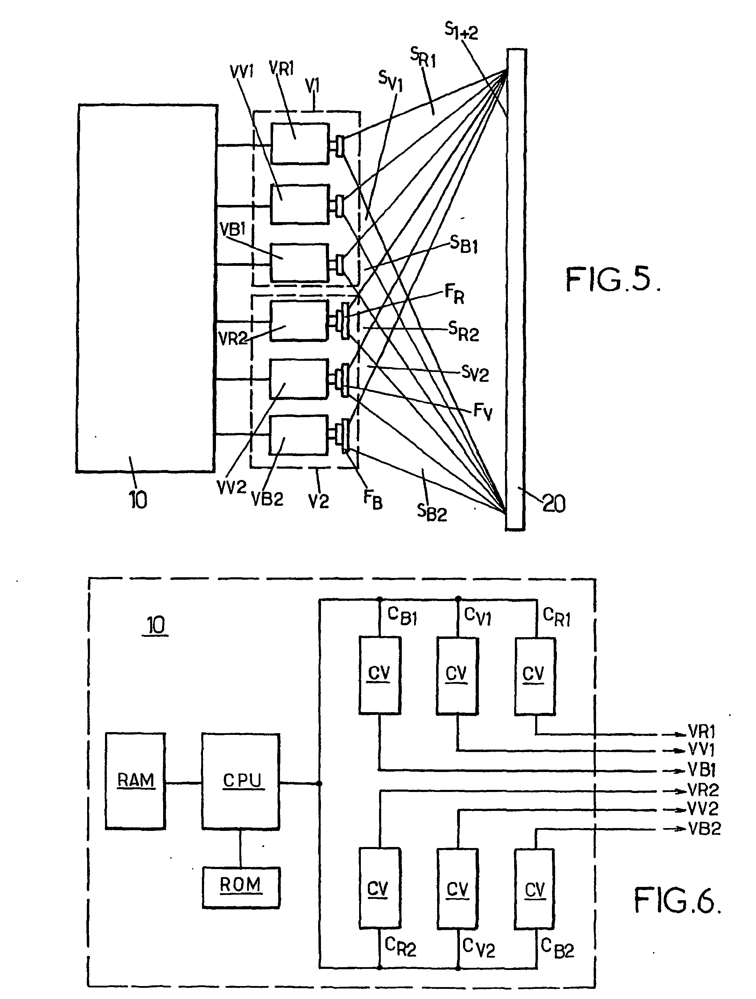

A la figure 5, on a représenté un exemple de dispositif pour la mise en oeuvre du procédé selon l'invention dans le cas d'un tel système colorimétrique. Cet exemple de réalisation s'inspire de la variante de la figure 3 pour lequel n est égal à deux. En effet, le dispositif préféré comprend alors trois paires d'unités de restitution lumineuse, dont chaque paire VR1-VR2, VV1-VV2, et VB1-VB2 est adaptée à la restitution d'un signal lumineux associé à la composante chromatique respectivement R, V et B du signal lumineux à restituer. Les optiques de sortie des unités VR2, VV2, et VB2 sont couplées à des filtres respectifs référencés respectivement $F_R$, $F_V$ et $F_B$, afin de respecter un certain rapport de leur flux lumineux maximum avec le flux lumineux maximum de l'autre unité de chaque paire, à savoir VR1, VV1, et VB1 respectivement. On note respectivement $K_R$, $K_V$ et $K_B$ ces rapports. On notera que les rapports $K_R$, $K_V$ et $K_B$ ne sont pas forcément égaux entre eux. Ils s'écrivent préférentiellement comme des puissances entières de deux, à savoir $K_R=2^{q_R}$, $K_V=2^{q_V}$ et $K_B=2^{q_B}$, où $q_R$, $q_V$ et $q_B$ sont des nombres entiers non forcément égaux. Les unités de restitution lumineuse VR1, VR2, VV1, VV2, VB1 et VB2 reçoivent de commandes $C_{R1}$, $C_{R2}$, $C_{V1}$, $C_{V2}$, $C_{B1}$ et $C_{B2}$ pour générer des signaux lumineux respectivement $S_{R1}$, $S_{R2}$, $S_{V1}$, $S_{V2}$, $S_{B1}$ et $S_{B2}$ avec des valeurs de luminance respectivement $L_{R1}$, $L_{R2}$, $L_{V1}$, $L_{V2}$, $L_{B1}$ et $L_{B2}$. Ces signaux lumineux sont superposés par projection sur l'écran 20 directement pour obtenir un signal résultant $S_{1+2}$. Ce signal résultant présente une valeur de luminance L à la précision du dispositif près.

Pour le reste, ce qui a été dit plus haut dans le cadre d'un système colorimétrique en niveau de gris s'applique, indépendamment pour chaque composante chromatique R, V et B, au cas d'un système colorimétrique tri-chromatique tel que le système RVB. Cela s'applique bien entendu, également au cas d'un autre système colorimétrique, tel par exemple que le système XYZ. Cela s'applique également à tout système colorimétrique dans lequel le nombre de composantes chromatiques serait différent de trois.

En pratique les unités de restitution lumineuse VR1, VV1, et VB1 sont comprises dans un premier vidéo-projecteur RVB référencé V1, alors que les unités de restitution lumineuse VR2, VV2, et VB2 sont comprises dans un deuxième vidéo-projecteur RVB référencé V2, différent du premier vidéo-projecteur V1. En effet, ceci permet l'emploi de vidéo-projecteurs RVB tels qu'ils sont actuellement disponibles sur le marché.

On notera que, selon des modes de réalisation différents, on peut générer des signaux lumineux intermédiaires obtenus soit par la superposition, pour chaque valeur de i comprise entre 1 et n, des trois signaux $S_{Ri}$, $S_{Vi}$ et $S_{Bi}$ associés à chaque composante chromatique respective, soit par la superposition, pour chaque composante chromatique, des n signaux respectivement $S_{Ri}$, $S_{Vi}$ et $S_{Bi}$ pour i allant de 1 à n. Dans le premier cas, on obtient n signaux lumineux intermédiaires. Dans le second, on obtient trois signaux lumineux intermédiaires. Dans les deux cas, le signal résultant est obtenu par la superposition des signaux intermédiaires définis ci-dessus. On notera par ailleurs que, dans d'autre exemple de mise en oeuvre, le nombre de signaux lumineux associés à deux composantes chromatiques distinctes n'est pas forcément identique. Par exemple, le dispositif peut comprendre $n_R$ vidéo-projecteurs pour la composante $L_R$, $n_V$ vidéo-projecteurs pour la composante $L_V$, et $n_B$ vidéo-projecteurs pour la composante $L_B$, avec $n_R$, $n_V$ et $n_B$ pas forcément égaux entre eux.

A la figure 6, on a représenté schématiquement une unité de gestion 10 convenant pour la mise en oeuvre du procédé selon l'invention. Sur cette figure, les mêmes éléments qu'aux figures 1, 3 et 4 portent les mêmes références. L'unité centrale de commande est reliée à une mémoire RAM du type mémoire vive et éventuellement à une mémoire ROM du type mémoire à lecture seule, dans laquelle ou dans lesquelles sont mémorisées les données numériques d'image qu'elle traite. Ces données numériques d'image peuvent correspondre à des images fixes, des images animées, ou à des images calculées en temps réel, selon le type d'application. Elles peuvent être générées par conversion analogique/numérique du signal analogique délivré par un transducteur vidéo analogique (une caméra analogique), ou être générées directement par un transducteur vidéo numérique (une caméra ou appareil numérique). Elles peuvent aussi être générées par calcul numérique au sein de l'unité CPU, dans le cas d'une image de synthèse ou d'une image produite par calcul de simulation physique.

L'unité centrale de calcul CPU est également reliée à des cartes vidéo CV pour leur transmettre à chacune, l'une des commandes $C_{Ri}$, $C_{Vi}$ et $C_{Bi}$ pour i allant de 1 à n (ici n=2). Les sorties des cartes vidéo CV sont prévues pour être reliées aux entrées respectives des unités de restitution lumineuse VRi, VVi et VBi. Les données numériques d'image traitées dans l'unité CPU sont codées sur N bits par composante colorimétrique, avec N valant par exemple 8xn (c'est à dire N=16 pour n=2) dans le cas où les cartes vidéo traitent des données numériques codées sur au plus huit bits. Donc la définition d'un signal lumineux quelconque dans le système tri-chromatique, qui implique trois composantes colorimétriques différentes, permet de coder les données numériques sur au plus 3x8xn bits (c'est à dire 48 bits dans l'exemple). Pour la restitution de ce signal lumineux, ces 48 bits sont tout d'abord décomposés en trois groupes de 16 bits à raison d'un groupe par composante colorimétrique. Puis les bits les plus significatifs de chaque groupe sont attribués aux commandes, respectivement $C_{R1}$, $C_{V1}$ et $C_{B1}$, transmis aux cartes vidéo associées aux unités de restitution lumineuse respectivement VR1, VV1 et VB1 du vidéo-projecteur V1 le plus puissant, alors que les bits les moins significatifs de chaque groupe sont attribués aux commandes, respectivement $C_{R2}$, $C_{V2}$ et $C_{B2}$, transmis aux cartes vidéo associées aux unités de restitution lumineuse respectivement VR2, VV2 et VB2 du vidéo-projecteur V2 le moins puissant.

En pratique, on constate que certaines unités de restitution lumineuses utilisées (notamment les vidéo-projecteurs RVB utilisés dans le cas d'une restitution par projection) peuvent présenter des défauts d'uniformité en luminance. Par cette expression, on entend le fait que la luminance maximum qui peut être obtenue à la périphérie de l'écran est inférieure à celle qui peut être obtenue en son centre. Il s'agit d'une uniformité spatiale en référence à la surface de l'écran. Il est souhaitable de traiter les données numériques d'image de manière à corriger ce défaut d'uniformité. Ceci est par exemple réalisé de manière logicielle en pondérant les données numériques d'image par un coefficient multiplicateur affecté à des zones respectives de l'écran. Ce coefficient est inférieur à l'unité, en sorte d'atténuer les valeurs de luminance maximum qu'on peut obtenir dans les zones proches du centre de l'écran pour qu'elles soient égales à celles des zones périphériques moins éclairées. Les valeurs de coefficients nécessaires sont stockées dans une table, dite table de calage en luminance, par exemple mémorisées dans la mémoire ROM de l'unité de gestion 10. Cette table est obtenue lors d'une phase d'étalonnage préalable au fonctionnement du dispositif en mode restitution d'images, qui comprend les étapes suivantes, pour chaque composante colorimétrique :

a) projection sur tout l'écran d'une image avec la luminance maximum en chaque point de l'écran (par exemple avec les commandes 255,0,0 pour une image rouge, les commandes 0,255,0 pour une image verte, et les commandes 0,0,255 pour une image bleue) ;
b) mesure de la luminance dans chaque zone de l'écran (une zone étant au mieux un pixel, et en général un ensemble de pixels adjacents), par exemple au moyen d'un vidéoluminancemètre (caméra étalonnée en luminance) placé à l'endroit présumé des yeux de l'utilisateur ;
c) calcul des coefficients de pondération en luminance de manière à obtenir sensiblement la même valeur de luminance en chaque zone de l'écran.

Selon l'invention, une table de calage en luminance est prévue pour chaque unité de restitution lumineuse. De cette manière, la correction effectuée pour chacune des unités de restitution lumineuse associée à une composante colorimétrique déterminée permet d'obtenir un effet d'uniformisation spatiale en luminance de l'image résultante ($S_{1+2}$, figures 1,3 et 4) sur toute la dynamique en luminance couverte par le dispositif pour cette composante colorimétrique. Par ailleurs, cette correction, effectuée pour chaque composante colorimétrique, permet en outre d'obtenir un effet d'uniformisation spatiale en luminance de l'image tri-chromatique résultante ($S_{1+2}$, figure 5) obtenue par superposition des images correspondant à chaque composante colorimétrique.

En variante, l'uniformisation peut être obtenue par l'adjonction d'un filtre ad-hoc, par exemple collé directement sur l'écran. Le taux de transmission de ce filtre est plus faible au centre qu'à la périphérie, en sorte que l'image affichée après filtrage apparaît uniforme sans pré-traitement numérique du signal lumineux par la table de calage. Cette variante est avantageuse car un pré-traitement numérique du signal lumineux se traduit par une diminution de la finesse de la résolution en luminance par rapport à la finesse qu'on peut obtenir sans un tel pré-traitement.

Un autre défaut des unités de restitution lumineuse qu'on constate en pratique, est constitué par les déformations géométriques de l'image. Ces déformations apparaissent, par exemple, sur l'écran dans le cas d'une restitution par projection. La figure 7a illustre ce phénomène. Elle montre comment une image 70, de forme rectangulaire, peut être restituée sur un écran sous la forme d'une image 71 dont la forme est toujours sensiblement rectangulaire mais présente des contours non rectilignes traduisant sa déformation géométrique d'ensemble. Les déformations de l'image 70 peuvent être mesurées en choisissant comme image 70 une grille témoin et en comparant l'image 71 restituée à une grille de référence 72, de même dimensions et de même maillage que la grille témoin. Ce défaut des unités de restitution lumineuse s'explique par une certaine distorsion introduite par l'ensemble de leurs éléments optiques. Cette distorsion prend une importance particulière dans un dispositif pour la mise en oeuvre du procédé selon l'invention, dans la mesure où celui-ci comporte une étape de superposition de signaux lumineux. En effet, tout décalage spatial entre des signaux lumineux devant être superposés, que ce soit sur l'écran ou à l'intérieur du vidéo-projecteur, résultant de cette distorsion, pourrait dans certains cas se traduire par une absence de superposition réelle. Dans ces conditions, il n'y aurait pas d'addition des luminances respectives de ces signaux. Ce défaut produit le même effet qu'un mauvais réglage des optiques de sortie des unités de restitution lumineuse dont il résulte un mauvais calage des signaux lumineux à superposer, qui ne sont pas en réalité exactement superposés. C'est pourquoi, selon une caractéristique de l'invention, ils sont traités de la même manière. En effet, il est prévu selon l'invention des moyens communs de correction des déformations géométriques d'image et des défauts de calage d'image du dispositif de restitution lumineuse. Ces moyens sont de nature essentiellement logicielle. Ces moyens permettent d'améliorer le calage des images qu'on peut obtenir en réglant au mieux les optiques de sortie des vidéo-projecteurs. Plus particulièrement, ils permettent de faire subir, à chaque point de l'image générée par une unité de restitution lumineuse déterminée, une transformation telle que, d'une part, l'image subisse une déformation inverse de celle introduite par les éléments optiques de l'unité de restitution lumineuse, et que, d'autre part, elle soit parfaitement calée avec les images générées par les autres unités de restitution lumineuse.

Afin de déterminer les transformations à effectuer, une phase de mesure de la déformation et du décalage spatial de l'image comprend les étapes suivantes, effectuées successivement pour chaque unité de restitution lumineuse :

a) projection d'une grille témoin par l'unité de restitution lumineuse ;
b) comparaison avec une grille de référence déterminée appliquée sur l'écran, pour mesurer une valeur de dérive de chaque intersection de la grille affichée par rapport à l'intersection correspondante de la grille de référence ;
c) détermination et mémorisation de valeurs de transformation à appliquer à chaque point de l'image, par interpolation bi-linéaire entre les valeurs de dérive des intersections voisines de la grille témoin.

Naturellement, c'est la même grille de référence qui doit être utilisée, à l'étape b), pour chaque unité de restitution lumineuse, afin d'obtenir un bon calage des images les unes avec les autres. Concernant l'étape c), on notera que chaque point de l'image se trouve forcément à l'intérieur d'une maille de la grille témoin, et que par conséquent sa valeur de transformation est déduite des valeurs de dérive des (au plus) quatre extrémités de cette mailles pour lesquelles une mesure a été réalisée à l'étape b). On notera que plus le maillage des grilles témoin et de référence est petit, c'est à dire plus le nombre de points pour lesquels la valeur de dérive est mesurée à l'étape b), et meilleure est la correction géométrique résultant du calcul des valeurs de transformation effectué à l'étape c).

A la figure 7b, on a représenté les contours d'une image 74 résultant de la transformation appliquée à chacun des points de l'image 70 à restituer, ainsi que l'image 75 effectivement restituée par le dispositif selon l'invention à partir des données de l'image 74 qui sont plus précisément les données de l'image 70 transformées. Par comparaison avec la grille de référence 72, on peut voir à la figure que cette image restituée 75 est parfaitement rectangulaire, géométriquement conforme à l'image 70.

Enfin un autre défaut des unités de restitution lumineuse utilisées, constaté en pratique, provient de ce que leur comportement n'est pas rigoureusement linéaire. En effet, la réponse optique d'un vidéo-projecteur n'est pas parfaitement liée aux commandes qui lui sont appliquées, en raison notamment de l'existence de phénomènes de fuite de lumière mal focalisée (phénomène de voile), dont l'importance dépend de l'intensité lumineuse générée. Par ailleurs, dans le cas d'un vidéo-projecteur tri-chromatique, il existe des phénomènes de couplage optique d'une composante sur les autres et, en outre, des phénomènes de pompage électronique entre composantes qui sont liés aux limites de l'alimentation électrique du vidéo-projecteur (on parle de défauts d'isolation des différentes composantes pour désigner ces deux types de phénomènes). Les phénomène de voile et les défauts d'isolation des différentes composantes perturbent l'application du principe théorique d'addition des luminances des différents signaux lumineux superposés. En outre, des imperfections inhérentes au type d'écran utilisé, et/ou aux conditions de son utilisation ajoutent encore à cette perturbation. Il résulte de ce qui précède que, en appliquant en entrée d'un vidéo-projecteur RVB les commandes $C_R$, $C_V$ et $C_B$ telles que définies plus haut, les valeurs de luminance obtenues sur l'écran ne sont pas exactement celles attendues. Dit autrement, le spectre du signal lumineux restitué n'est pas parfaitement fidèle au spectre $S(\lambda)$ du signal à restituer. Dans la suite, on désigne par "non linéarités" l'ensemble des phénomènes qui conduisent à cette imperfection du dispositif de restitution lumineuse.

Afin d'éliminer au mieux l'effet de ces non linéarités, l'invention prévoit la mise en oeuvre de moyens de compensation dans chaque unité de restitution lumineuse utilisée. La compensation consiste à convertir des coordonnées colorimétriques du signal lumineux à restituer, obtenues par exemple par projection du spectre $S(\lambda)$ du signal lumineux à restituer dans le repère d'un système colorimétrique quelconque, en des valeurs de commande, dans le système colorimétrique de l'unité lumineuse, qui sont propres à piloter cette unité de restitution lumineuse de manière à restituer fidèlement ledit signal lumineux, c'est à dire restituer un signal lumineux affranchi des perturbations dues aux non linéarités. Dit autrement, les commandes $C_R$, $C_V$ et $C_B$ qu'il convient d'appliquer en entrée d'un vidéo-projecteur RVB pour l'affichage de ce signal lumineux sont déterminées, non plus directement par les formules rappelées plus haut qui donnent les coordonnées colorimétriques du signal lumineux à restituer dans le repère du système colorimétrique de l'unité de restitution lumineuse, mais à partir de ces coordonnées colorimétriques auxquelles on applique une conversion correctrice de l'effet des non linéarités.

Une table de calibrage est créée et mémorisée, pour chaque vidéo-projecteur du dispositif, lors d'une phase de calibrage préalable au fonctionnement du dispositif en mode normal de restitution. Cette table comporte, pour un certain nombre de triplets de commande $C_R, C_V, C_B$ déterminés, les coordonnées colorimétriques, dans un système colorimétrique déterminé, du signal qui est restitué par le vidéo-projecteur lorsque ces commandes lui sont appliquées. Par souci de simplification des notations employées, on considère les coordonnées colorimétriques obtenue en projetant le spectre du signal restitué sur le repère du système colorimétrique XYZ. Mais il est bien entendu que ceci n'est pas limitatif. Toutefois, et indépendamment du souci de simplification des notations employées évoqué ci-dessus, on verra que l'utilisation des coordonnées colorimétriques dans le système XYZ est avantageuse. Cette table de calibrage peut être générée de façon automatique sous la commande d'un logiciel pilotant trois cartes vidéo (ou de préférence une carte vidéo tri-chromatique) avec lesdits triplets de commande $C_R, C_V, C_B$ déterminés et récupérant le signal en sortie du vidéo-projecteur sur un spectrophotomètre ou un colorimètre. Ce signal de sortie est ensuite projeté, par calcul numérique, sur le repère du système XYZ. Cette table de calibrage, notée RVB_TO_XYZ dans la suite, permet de connaître les coordonnées colorimétriques du signal restitué dans le repère du système XYZ lorsque les commandes $C_R, C_V, C_B$ sont appliquées en entrée du vidéo-projecteur RVB. La table RVB_TO_XYZ est une table à trois dimensions indexée par les trois commandes $C_R$, $C_V$, et $C_B$. Chaque commande est codée sur 8 bits. Bien entendu, les valeurs des triplets $C_R, C_V, C_B$ sont choisies de manière à couvrir sensiblement tout le spectre utile du vidéo-projecteur. Chacune des trois coordonnées colorimétriques du signal restitué dans le repère du système XYZ est codée sur 16 bits. C'est donc au total des données numériques de 48 bits qui sont stockées dans la table RVB_TO_XYZ.

La phase de calibrage comprend ensuite une étape de création et de mémorisation d'une autre table, dite table de conversion et notée XYZ_TO_RVB dans la suite, obtenue en inversant la table de calibrage RVB_TO_XYZ. Plus particulièrement, pour chaque triplet de coordonnées colorimétriques $X_0,Y_0,Z_0$ d'un ensemble comprenant à peu près un millier de tels triplets qui correspondent (dans le repère du système XYZ) à autant de signaux lumineux déterminés couvrant sensiblement tout le spectre utile du vidéo-projecteur, il est procédé aux étapes suivantes :

a) détermination des M triplets de coordonnées colorimétriques $X_j,Y_j,Z_j$ (pour j allant de 1 à M) stockées dans la table de calibrage RVB_TO_XYZ qui sont les plus "proches" du triplet $X_0,Y_0,Z_0$;
b) détermination des M triplets de commandes $C_{Rj},C_{Vj},C_{Bj}$ (pour j allant de 1 à M) associés à ces M triplets de coordonnées colorimétriques $X_j,Y_j,Z_j$ ;
c) détermination d'un triplet de coordonnées colorimétriques entières $C_{RO},C_{V0},C_{B0}$, obtenu par interpolation desdits M triplets $C_{Rj},C_{Vj},C_{Bj}$ (pour j allant de 1 à M) et prise en compte uniquement de la valeur entière de chaque composante du triplet issu de cette interpolation ;
d) mémorisation dudit triplet $C_{RO},C_{V0},C_{B0}$ dans la table de conversion XYZ_TO_RVB du vidéo-projecteur.

La table de conversion associe donc, à des valeurs de coordonnées colorimétriques d'un signal lumineux déterminé, codées sur 16 bits, des valeurs de commandes à appliquer aux unités de restitution lumineuse pour générer un signal lumineux le plus proche possible dudit signal lumineux déterminé, chaque valeur de commande étant codée sur 8 bits. L'interpolation dont il est question à l'étape c) ci-dessus peut être du type linéaire, quadratique ou autre. On notera que la taille de la table de calibrage RVB_TO_XYZ doit être suffisante pour permettre cette interpolation. En pratique, une table avec un millier d'entrées (triplets $C_R,C_V,C_B$) est suffisante. La taille de la table de calibrage RVB_TO_XYZ (exprimée nombre d'octets de mémoire) peut avantageusement être déterminée de manière dynamique, en allouant l'espace mémoire nécessaire compte tenu des caractéristiques du vidéo-projecteur en cours de calibrage. Ceci permet de n'utiliser que le temps de mesure, que le temps de calcul (notamment pour l'inversion de cette table donnant la table de conversion) et que l'espace mémoire qui sont nécessaires pour obtenir un calibrage suffisant du vidéo-projecteur. Compte tenu du nombre élevé de valeurs de la table de calibrage RVB_TO_XYZ, la notion de proximité intervenant à l'étape a) peut être définie de manière très simple en fonction d'une distance cartésienne définie mathématiquement. On notera que le recours au système XYZ pour la décomposition en coordonnées colorimétriques du signal à restituer est avantageux car, selon ce système, la composante Y porte à elle seule l'essentiel de l'information en luminance du signal, les deux autres composantes X et Z portant une information essentiellement chromatique. Cette caractéristique facilite la mise en oeuvre de l'étape a) dans la mesure où la notion de proximité peut être essentiellement appliquée à cette composante.

L'organigramme de la figure 8 illustre les étapes du procédé de restitution lumineuse telles qu'elles sont mises en oeuvre, en pratique, avec un dispositif tel que représenté schématiquement à la figure 5, mais qui ne serait pas linéaire. On fait toutefois l'hypothèse suivant laquelle la réponse en Luminance du dispositif, qui n'est pas linéaire, est malgré tout une fonction croissante des commandes appliquées aux unités de restitution lumineuse. On considère un signal lumineux S à restituer quelconque. Les trois coordonnées colorimétriques du signal S dans le repère du système XYZ sont délivrées par l'unité CPU sous forme de données numériques codées sur 16 bits chacune (soit 48 bits au total). On les note $X_S,Y_S,Z_S$. Une étape de conversion 101 permet, en fonction de la table de conversion XYZ_TO_RVB du premier vidéo-projecteur le plus puissant V1, référencée 100, d'obtenir les valeurs de commande $C_{R1},C_{V1},C_{B1}$, codées sur 8 bits chacune, qui doivent être appliquées audit vidéo-projecteur V1 pour générer un signal lumineux qui soit le plus proche possible du signal S. Une étape de génération 102 permet de générer, au moyen du vidéo-projecteur V1, en fonction desdites commandes $C_{R1},C_{V1},C_{B1}$, un premier signal lumineux dont la luminance est inférieure à celle du signal S compte tenu de la définition des valeurs de la table de conversion (voir, ci-dessus, étape c) du procédé d'obtention de cette table) et compte tenu également de l'hypothèse formulée plus haut. Ce premier signal est défini, dans le système XYZ par les coordonnées $X_1,Y_1,Z_1$. Ensuite, une étape 103 consiste à déterminer la différence entre les coordonnées $X_S,Y_S,Z_S$ du signal lumineux S à restituer et les coordonnées $X_1,Y_1,Z_1$ dudit premier signal. On notera que ces dernières sont obtenues par lecture dans la table de calibrage RVB_TO_XYZ du premier vidéo-projecteur V1 en fonction du triplet $C_{R1},C_{V1},C_{B1}$. On obtient ainsi les coordonnées $X_S',Y_S',Z_S'$ d'un premier signal d'erreur qui correspond à la précision avec laquelle le vidéo-projecteur V1 est capable d'afficher la signal lumineux S à restituer.

Les étapes ci-dessus sont ensuite répétées pour le premier signal d'erreur $X_S',Y_S',Z_S'$, de manière à restituer ce signal d'erreur au moyen du deuxième vidéo-projecteur V2 (le moins puissant). Plus particulièrement, une étape de conversion 201 permet, en fonction de la table de conversion XYZ_TO_RVB du deuxième vidéo-projecteur le moins puissant V2, référencée 200, d'obtenir les valeurs de commande $C_{R2},C_{V2},C_{B2}$ qui doivent être appliquées audit vidéo-projecteur V2 pour générer un signal lumineux qui soit le plus proche possible du signal d'erreur $X_S',Y_S',Z_S'$. Une étape de génération 202 permet de générer un deuxième signal lumineux au moyen du vidéo-projecteur V2 en fonction desdites commandes $C_{R2}, C_{V2}, C_{B2}$. Ce deuxième signal est défini, dans le système XYZ par les coordonnées $X_2, Y_2, Z_2$. On notera que ces dernières sont obtenues par lecture dans la table de calibrage RVB_TO_XYZ du deuxième vidéo-projecteur V2 en fonction du triplet $C_{R2}, C_{V2}, C_{B2}$.

Un signal résultant est généré, comme précédemment indiqué, par superposition des premier et deuxième signaux lumineux ci-dessus. Bien entendu, ce signal résultant diffère du signal lumineux S à restituer d'une différence qui s'exprime comme un deuxième signal d'erreur et qui correspond à l'erreur avec laquelle le deuxième vidéo-projecteur V2 est capable de restituer le premier signal d'erreur $X_S'', Y_S'', Z_S''$. On peut alors lire les coordonnées colorimétriques $X_2, Y_2, Z_2$ du deuxième signal dans la table de calibrage RVB_TO_XYZ du deuxième vidéo-projecteur V2, calculer la différence entre les coordonnées $X_S', Y_S', Z_S'$ et les coordonnées $X_2, Y_2, Z_2$ pour obtenir les coordonnées $X_S''$, $Y_S'', Z_S''$ du deuxième signal d'erreur, puis répéter les étapes ci-dessus en vue de la restitution de ce deuxième signal d'erreur $X_S'', Y_S'', Z_S''$ au moyen d'un troisième vidéo-projecteur. Et ainsi de suite ...

Les étapes du procédé sont exécutées sous la commande de l'unité centrale de calcul CPU (figure 6). Les étapes de conversion 101, 201,... sont réalisées au moyen des tables de conversion XYZ_TO_RVB 100 et 200 de chaque vidéo-projecteur qui sont mémorisées dans une mémoire ROM de l'unité de gestion 10. Les étapes de calcul de différence 103, ... sont réalisées au moyen des tables de calibrage RVB_TO_XYZ de chaque vidéo-projecteur qui sont également mémorisées dans la mémoire ROM de l'unité de gestion 10. Dans certaines applications, la phase de calibrage préalable au fonctionnement normal en mode restitution doit être réalisée à chaque mise en route du dispositif. Dans ce cas, les tables de calibrage et de conversion peuvent être mémorisées dans la mémoire RAM qui est une mémoire vive.

La compensation des non linéarités du dispositif de restitution lumineuse ainsi obtenue en pratique est simple à mettre en oeuvre car elle ne nécessite pas de connaître ou de modéliser avec précision le comportement de celui-ci. Seule la relation entre les sorties et les entrées du dispositif est prise en compte, et celle-ci est déterminée de manière expérimentale, par la génération d'une table de calibrage pour chaque vidéo-projecteur, ainsi qu'il a été exposé.

**Revendications**

1. Procédé de restitution d'un signal lumineux à partir de données numériques définissant au moins une coordonnée colorimétrique du signal lumineux dans un système colorimétrique déterminé, chaque coordonnée colorimétrique étant codée sur N bits de données et correspondant à une valeur de luminance ($L_0$) associée à une composante déterminée du signal lumineux dans le système colorimétrique, **caractérisé en ce qu'**il comprend les étapes consistant à :

   a) traiter lesdits N bits de données de façon à générer un premier signal lumineux, au moyen d'une première unité de restitution lumineuse (V1) qui peut produire des valeurs de luminance dans un premier ensemble de valeurs discrètes couvrant une première dynamique en luminance ($0-Lmax_1$);
   b) traiter lesdits N bits de données de façon à générer au moins un deuxième signal lumineux, au moyen d'une deuxième unité de restitution lumineuse (V2) qui peut produire des valeurs de luminance dans un deuxième ensemble de valeurs discrètes couvrant une deuxième dynamique en luminance($0-Lmax_2$), inférieure à ladite première dynamique en luminance ($0-Lmax_1$), la deuxième unité de restitution lumineuse ayant une résolution en luminance plus fine que la première unité de restitution lumineuse ;
   c) générer un troisième signal lumineux obtenu en superposant lesdits premier et deuxième signaux lumineux.

2. Procédé selon la revendication 1 **caractérisé en ce que** la deuxième dynamique ($0-Lmax_2$) correspond sensiblement à la résolution en luminance de la première unité de restitution lumineuse (V1).

3. Procédé selon l'une des revendications précédentes, **caractérisé en ce que** le premier signal lumineux ($S_1$) généré par la première unité de restitution lumineuse (V1) à l'étape a) présente une valeur de luminance ($L_1$) définie comme étant la valeur de luminance dudit premier ensemble qui est juste inférieure à ladite valeur de luminance déterminée ($L_0$).

4. Procédé selon la revendication 3, **caractérisé en ce que** le deuxième signal lumineux ($S_2$) généré par la deuxième unité de restitution lumineuse (V2) à l'étape b) présente une valeur de luminance définie comme étant la valeur de luminance dudit deuxième ensemble qui est juste inférieure à, ou la plus proche de la différence ($Lr_1$) entre ladite valeur de luminance déterminée ($L_0$) et ladite valeur de luminance ($L_1$) dudit premier ensemble qui est juste inférieure à ladite valeur de luminance déterminée ($L_0$).

**5.** Procédé selon l'une des revendications précédentes, **caractérisé en ce que**, l'étape a) consiste à générer une commande ($C_{V1}$) de la première unité de restitution lumineuse (V1) codée sur q bits et l'étape b) consiste à générer une commande ($C_{V2}$) de la deuxième unité de restitution lumineuse (V1) codée sur N-q bits, où q est un nombre entier tel que $1 \leq q < N-1$.

**6.** Procédé selon la revendication 5, **caractérisé en ce que** le flux lumineux maximum de la première unité de restitution lumineuse est K fois plus élevé que celui de la deuxième unité de restitution lumineuse, avec $K=2^q$.

**7.** Procédé selon la revendication 5, **caractérisé en ce que** le premier ensemble comprend $2^q$ valeurs discrètes et **en ce que** le deuxième ensemble comprend $2^{N-q}$ valeurs discrètes.

**8.** Procédé selon l'une des revendications précédentes, **caractérisé en ce que** le premier ensemble comprend des valeurs de luminance régulièrement réparties sur la première dynamique (0-$Lmax_1$), en sorte que la première unité de restitution lumineuse couvre la première dynamique avec des sauts en luminance sensiblement égaux à une première valeur de sauts ($Lmax_1/2^{c_1}$).

**9.** Procédé selon l'une des revendications précédentes, **caractérisé en ce que** le deuxième ensemble comprend des valeurs de luminance régulièrement réparties sur la deuxième dynamique (0-$Lmax_2$) en sorte que la deuxième unité de restitution lumineuse couvre la deuxième dynamique avec des sauts en luminance sensiblement égaux à une deuxième valeur de sauts ($Lmax_2/2^{c_2}$).

**10.** Procédé selon les des revendications 8 et 9, **caractérisé en ce que** la deuxième valeur de sauts ($Lmax_2/2^{c_2}$) est inférieure à la première valeur de sauts ($Lmax_1/2^{c_1}$).

**11.** Procédé selon l'une des revendications 5 à 10, **caractérisé en ce que** N vaut seize (N=16) et **en ce que** q vaut huit (q=8).

**12.** Procédé selon l'une des revendications précédentes, **caractérisé en ce que** l'étape c) est réalisée par superposition optique des premiers ($S_1$) et deuxième ($S_2$) signaux lumineux projetés sur un écran (20).

**13.** Procédé selon l'une des revendications précédentes, **caractérisé en ce que** l'étape c) est réalisée par superposition optique des premiers ($S_1$) et deuxième ($S_2$) signaux lumineux avant projection sur un écran (20).

**14.** Procédé selon l'une quelconque des revendications précédentes, **caractérisé en ce que**, le système colorimétrique étant le système tri-chromatique Rouge, Vert, Bleu, les étapes a) à c) sont exécutées pour chacune des trois composantes (R,V,B) du signal lumineux dans ce système colorimétrique.

**15.** Dispositif de restitution d'un signal lumineux à partir de données numériques définissant au moins une coordonnée colorimétrique du signal lumineux dans un système colorimétrique déterminé, chaque coordonnée colorimétrique étant codée sur N bits de données et correspondant à une valeur de luminance ($L_0$) associée à une composante déterminée du signal lumineux dans le système colorimétrique, **caractérisé en ce qu'**il comporte

- une première unité de restitution lumineuse (V1) qui peut produire des valeurs de luminance dans un premier ensemble de valeur discrètes couvrant une première dynamique en luminance (0-$Lmax_1$) ;
- au moins une deuxième unité de restitution lumineuse (V2) qui peut produire des valeurs de luminance dans un deuxième ensemble de valeurs discrètes couvrant une deuxième dynamique en luminance (0-$Lmax_2$), inférieure à ladite première dynamique en luminance (0-$Lmax_1$), la deuxième unité de restitution lumineuse (V2) ayant une résolution en luminance plus fine que la première unité de restitution lumineuse (V1) ;
- des moyens de gestion (10) pour commander lesdites première (V1) et deuxième (V2) unités de restitution lumineuse en fonction desdits N bits de données de manière à ce qu'elles produisent respectivement un premier ($S_1$) et un deuxième ($S_2$) signal lumineux, lesdites première (V1) et deuxième (V2) unités de restitution lumineuse étant en outre agencées pour produire un troisième signal lumineux ($S_1+S_2$) obtenu en superposant lesdits premier ($S_1$) et deuxième ($S_2$) signaux lumineux.

**16.** Dispositif selon la revendication 15 **caractérisé en ce que** la deuxième dynamique (0-$Lmax_2$) correspond sensiblement à la résolution en luminance de la première unité de restitution lumineuse (V1).

**17.** Dispositif selon l'une des revendications 15 ou 16, **caractérisé en ce que** les moyens de gestion (10), délivrent une commande ($C_{V1}$) à la première unité de restitution lumineuse (V1) codée sur q bits et une commande ($C_{V2}$) à la deuxième unité de restitution lumineuse (V1) codée sur N-q bits, où q est un nombre entier tel que $1 \leq q < N-1$.

18. Dispositif selon l'une des revendications 15 à 17, **caractérisé en ce que** la deuxième unité de restitution lumineuse (V2) présente un flux lumineux maximum (F2) K fois plus faible que celui (F1) de la première unité de restitution lumineuse (V1).

19. Dispositif selon la revendication 18, **caractérisé en ce que** la deuxième unité de restitution lumineuse (V2) présente un flux maximal nominal égal à celui de la première unité de restitution lumineuse (V1), mais est couplée à des moyens de filtrage (F) permettant d'abaisser le flux maximum qu'elle peut générer dans un rapport égal à K.

20. Dispositif selon les revendications 17 et 18 ou selon les revendications 17 et 19, **caractérisé en ce que** $K=2^q$.

21. Procédé selon la 17, **caractérisé en ce que** le premier ensemble comprend $2^q$ valeurs discrètes et **en ce que** le deuxième ensemble comprend $2^{N-q}$ valeurs discrètes.

22. Dispositif selon l'une des revendications 15 à 21, **caractérisé en ce que** le premier ensemble comprend des valeurs de luminance régulièrement réparties sur la première dynamique ($0-Lmax_1$), en sorte que la première unité de restitution lumineuse (V1) couvre la première dynamique avec des sauts en luminance sensiblement égaux à une première valeur de sauts ($Lmax_1/2^{c1}$).

23. Dispositif selon l'une des revendications 15 à 22, **caractérisé en ce que** le deuxième ensemble comprend des valeurs de luminance régulièrement réparties sur la deuxième dynamique ($0-Lmax_2$) en sorte que la deuxième unité de restitution lumineuse (V2) couvre la deuxième dynamique avec des sauts en luminance sensiblement égaux à une deuxième valeur de sauts ($Lmax_2/2^{c2}$).

24. Dispositif selon les revendications 22 et 23 **caractérisé en ce que** la deuxième valeur de sauts ($Lmax_2/2^{c2}$) est inférieure à ladite première valeur de sauts ($Lmax_1/2^{c1}$).

25. Dispositif selon l'une des revendications 17 à 24, **caractérisé en ce que** N vaut seize (N=16) et **en ce que** q vaut huit (q=8).

26. Dispositif selon l'une des revendications 15 à 25, **caractérisé en ce qu'**il comprend un écran (20) et **en ce que** les première (V1) et deuxième (V2) unités de restitution lumineuse sont agencées pour projeter simultanément les premier ($S_1$) et deuxième ($S_2$) signaux lumineux sur ledit écran (20) de telle manière que le troisième signal lumineux ($S_{1+2}$) soit obtenu par leur superposition optique sur ledit écran (20).

27. Dispositif selon l'une des revendications 15 à 25, **caractérisé en ce qu'**il comprend une optique de sortie (OS, figure 4) et des moyens pour colimater les premier ($S_1$) et deuxième ($S_2$) signaux lumineux sur ladite optique de sortie.

28. Dispositif selon l'une des revendications 15 à 27, **caractérisé en ce qu'**il comporte des moyens de réglage de la superposition des images générées par la première (V1) et par la deuxième (V2) unité de restitution d'image respectivement.

29. Dispositif selon l'une des revendications 15 à 28, **caractérisé en ce qu'**il comprend des moyens de correction des défauts d'uniformité en luminance des unités de restitution lumineuses (V1,V2).

30. Dispositif selon l'une des revendications 15 à 29, **caractérisé en ce qu'**il comprend des moyens de correction des défauts déformation géométrique et de calage des unités de restitution lumineuse (V1,V2).

31. Dispositif selon l'une des revendications 15 à 30, **caractérisé en ce qu'**il comporte des moyens pour déterminer des commandes à appliquer aux unités de restitution lumineuses (V1,V2), en fonction des coordonnées colorimétriques du signal lumineux à restituer, de manière à compenser l'effet des non-linéarités du dispositif.

32. Dispositif selon la revendication 31, **caractérisé en ce que** lesdits moyens comprennent une table de conversion (XYZ_TO_RVB) qui associe, à des valeurs de coordonnées colorimétriques, dans un système colorimétrique déterminé, du signal lumineux à restituer des commandes ($C_{R1}, C_{V1}, C_{B1}; C_{R2}, C_{V2}, C_{B2}$) à appliquer aux unités de restitution lumineuse (V1;V2).

33. Dispositif selon la revendication 32, **caractérisé en ce que** la table de conversion est obtenue par inversion d'une table de calibrage (RVB_TO_XYZ) qui associe, pour un certain nombre de commandes déterminées, les coordonnées colorimétriques, dans ledit système colorimétrique déterminé, du signal qui est restitué par les unités de restitution lumineuses (V1,V2) lorsque ces commandes leurs sont appliquées.

34. Dispositif selon l'une des revendications 15 à 33, **caractérisé en ce que** l'écran est de type lentille de Fresnel.

**Patentansprüche**

1. Verfahren zur Wiederherstellung eines Leuchtsignals ausgehend von digitalen Daten, die mindestens eine kolorimetrische Koordinate des Leuchtsignals in einem bestimmten kolorimetrischen System definieren, wobei jede kolorimetrische Koordinate über N Datenbits kodiert ist und einem Luminanzwert ($L_O$) entspricht, der mit einer bestimmten Komponente des Leuchtsignals in dem kolorimetrischen System in Beziehung steht, **dadurch gekennzeichnet, dass** es die Schritte umfasst, welche darin bestehen:

   a) Verarbeiten der N Datenbits auf solche Weise, dass ein erstes Leuchtsignal erzeugt wird, mittels einer ersten Lichtwiederherstellungseinheit (V1), die Luminanzwerte in einem ersten Satz von diskreten Werten erzeugen kann, der einen ersten Luminanzdynamikbereich abdeckt ($0\text{-}Lmax_1$);

   b) Verarbeiten der N Datenbits auf solche Weise, dass mindestens ein zweites Leuchtsignal erzeugt wird, mittels einer zweiten Lichtwiederherstellungseinheit (V2), die Leuchtwerte in einem zweiten Satz von diskreten Werten erzeugen kann, der einen zweiten Luminanzdynamikbereich abdeckt ($0\text{-}Lmax_2$), welcher kleiner ist als der erste Luminanzdynamikbereich ($0\text{-}Lmax_1$), wobei die zweite Lichtwiederherstellungseinheit eine feinere Luminanzauflösung hat als die erste Lichtwiederherstellungseinheit;

   c) Erzeugen eines dritten Leuchtsignals, das erhalten wird durch Überlagerung des ersten und zweiten Leuchtsignals.

2. Verfahren nach Anspruch 1, **dadurch gekennzeichnet, dass** der zweite Dynamikbereich ($O\text{-}Lmax_2$) im wesentlichen der Luminanzauflösung der ersten Lichtwiederherstellungseinheit (V1) entspricht.

3. Verfahren nach einem der vorangehenden Ansprüche, **dadurch gekennzeichnet, dass** das erste Leuchtsignal ($S_1$), das von der ersten Lichtwiederherstellungseinheit (V1) im Schritt a) erzeugt wird, einen Luminanzwert ($L_1$) präsentiert, der definiert ist als der Luminanzwert des ersten Satzes, der gerade kleiner ist als der bestimmte Luminanzwert ($L_O$).

4. Verfahren nach Anspruch 3, **dadurch gekennzeichnet, dass** das zweite Leuchtsignal ($S_2$), das von der zweiten Lichtwiederherstellungseinheit (V2) in dem Schritt b) erzeugt wird, einen Luminanzwert aufweist, der definiert ist als der Luminanzwert des zweiten Satzes, der gerade kleiner ist als, oder am nächsten liegt zur Differenz ($Lr_1$) zwischen dem bestimmten Luminazwert ($L_0$) und dem Luminanzwert ($L_1$) des ersten Satzes, der gerade kleiner ist als der bestimmte Luminanzwert ($L_0$).

5. Verfahren nach einem der vorangehenden Ansprüche, **dadurch gekennzeichnet, dass** der Schritt a) darin besteht einen Befehl ($C_{V1}$) für die ersten Lichtwiederherstellungseinheit (V1) zu erzeugen, der über q Bits kodiert ist, und der Schritt b) darin besteht einen Befehl ($C_{V2}$) für die zweite Lichtwiederherstellungseinheit (V1) zu erzeugen, der über N-q Bits kodiert ist, wobei q eine ganze Zahl ist, so dass $1 \leq q < N\text{-}1$.

6. Verfahren nach Anspruch 5, **dadurch gekennzeichnet, dass** der maximale Leuchtfluss der ersten Lichtwiederherstellungseinheit K mal größer ist als jener der zweiten Lichtwiederherstellungseinheit, mit $K=2^q$.

7. Verfahren nach Anspruch 5, **dadurch gekennzeichnet, dass** der erste Satz $2^q$ diskrete Werte umfasst, und der zweite Satz $2^{N\text{-}q}$ diskrete Werte umfasst.

8. Verfahren nach einem der vorangehenden Ansprüche, **dadurch gekennzeichnet, dass** der erste Satz Luminanzwerte umfasst, die regelmäßig verteilt sind auf den ersten Dynamikbereich ($0\text{-}Lmax_1$), so dass die erste Lichtwiederherstellungseinheit den ersten Dynamikbereich mit Luminazschritten abdeckt, die im wesentlichen gleich einem ersten Schrittwert ($Lmax_1/2^{c1}$) sind.

9. Verfahren nach einem der vorangehenden Ansprüche, **dadurch gekennzeichnet, dass** der zweite Satz Luminanzwaerte umfasst, die über den zweiten Dynamikbereich ($0-Lmax_2$) regelmäßig verteilt sind, so dass die zweite Lichtwiederherstellungseinheit den zweiten Dynamikbereich mit Luminanzschritten abdeckt, die im wesentlichen gleich einem zweiten Schrittwert ($Lmax_2/2^{c2}$) sind.

10. Verfahren nach Anspruch 8 oder 9, **dadurch gekennzeichnet, dass** der zweite Schrittwert ($Lmax_2/2^{c2}$) kleiner als der erste Schrittwert ($Lmax_1/2^{c1}$) ist.

11. Verfahren nach einem der Ansprüche 5 bis 10, **dadurch gekennzeichnet, dass** N den Wert sechzehn (N=16) hat und q den Wert acht (q=8) hat.

12. Verfahren nach einem der vorangehenden Ansprüche, **dadurch gekennzeichnet, dass** der Schritt c) verwirklicht wird durch optische Überlagerung des ersten ($S_1$) und zweiten ($S_2$) Leuchtsignals, projiziert auf einem Schirm (20).

13. Verfahren nach einem der vorangehenden Ansprüche, **dadurch gekennzeichnet, dass** der Schritt c) durch optische Überlagerung des ersten ($S_1$) und zweiten ($S_2$) Leuchtsignals nach der Projektion auf einen Schirm (20) verwirklicht ist.

14. Verfahren nach einem der vorangehenden Ansprüche, **dadurch gekennzeichnet, dass** das kolorimetrische System das trichromatische Rot-Grün-Blau-System ist, und die Schritte a) bis c) für jede der drei Komponenten (R, V, B) des Leuchtsignals im kolometrischen System ausgeführt werden.

15. Vorrichtung zur Wiederherstellung eines Leuchtsignals ausgehend von digitalen Daten, welche mindestens eine kolorimetrische Koordinate des Leuchtsignals in einem bestimmten kolorimetrischen System definieren, wobei jede kolorimetrsiche Koordinate über N Datenbits kodiert ist und einem Luminanzwert ($L_0$) entspricht, der mit einer bestimmten Komponente des Leuchtsignals im kolorimetrischen System in Beziehung steht, **dadurch gekennzeichnet, dass** sie umfasst:

    - eine erste Lichtwiederherstellungseinheit (V1), welche Luminanzwerte in einem ersten Satz von diskreten Werten erzeugen kann, der einen ersten Luminanzdynamikbereich ($0-Lmax_1$) abdeckt;

    - mindestens eine zweite Lichtwiederherstellungseinheit (V2), welche Luminanzwerte in einem zweiten Satz von diskreten Werten erzeugt, der einen zweiten Luminanzdynamikbereich ($0-Lmax_2$) abdeckt, der kleiner ist als der erste Luminanzdynamikbereich ($0-Lmax_1$), wobei die zweite Lichtwiederherstellungseinheit (V2) eine feinere Luminanzauflösung hat als die erste Lichtwiederherstellungseinheit (V1);

    - Verwaltungsmittel (10) zur Steuerung der ersten (V1) und der zweiten (V2) Lichtwiederherstellungseinheit als Funktion der N Datenbits, so dass sie ein erstes ($S_1$) bzw. zweites ($S_2$) Leuchtsignal erzeugen, wobei die erste (V1) und zweite (V2) Lichtwiederherstellungseinheit außerdem angeordnet sind, um ein drittes Leuchtsignal ($S_1+S_2$) zu erzeugen, das durch Überlagerung des ersten ($S_1$) und zweiten ($S_2$) Leuchtsignals erhalten wird.

16. Vorrichtung nach Anspruch 15, **dadurch gekennzeichnet, dass** der zweite Dynamikbereich ($0-Lmax_2$) im wesentlichen der Luminanzauflösung der ersten Lichtwiederherstellungseinheit (V1) entspricht.

17. Vorrichtung nach einem der Ansprüche 15 oder 16, **dadurch gekennzeichnet, dass** das Verwaltungsmittel (10) einen Befehl ($C_{V1}$) für die erste Lichtwiederherstellungseinheit (V1) liefert, der über q Bits kodiert ist, und einen Befehl ($C_{V2}$) für die zweite Lichtwiederherstellungseinheit (V1), der über N-q Bits kodiert ist, wobei q eine ganze Zahl ist, so dass
$1 \leq q < N-1$.

18. Vorrichtung nach einem der Ansprüche 15 bis 17, **dadurch gekennzeichnet, dass** die zweite Lichtwiederherstellungseinheit (V2) einen maximalen Leuchtfluss (F2) präsentiert, der K mal schwächer als jener (F1) der ersten Lichtwiederherstellungseinheit (V1).

19. Vorrichtung nach Anspruch 18, **dadurch gekennzeichnet, dass** die zweite Lichtwiederherstellungseinheit (V2) einen maximalen Fluss präsentiert, der nominal gleich jenem der ersten Lichtwiederherstellungseinheit (V1) ist, aber mit einem Filtermittel (F) gekoppelt ist, das eine Absenkung des maximalen Flusses, den sie erzeugen kann, in einem Verhältnis, das gleich K ist, absenken kann.

**20.** Vorrichtung nach Anspruch 17 und 18, oder nach Anspruch 17 und 19, **dadurch gekennzeichnet, dass** $K=2^q$.

**21.** Verfahren nach Anspruch 17, **dadurch gekennzeichnet, dass** der erste Satz $2^q$ diskrete Werte umfasst, und das der zweite Satz $2^{N-q}$ diskrete Werte umfasst.

**22.** Vorrichtung nach einem der Ansprüche 15 bis 21, **dadurch gekennzeichnet, dass** der erste Satz Luminanzwerte umfasst, die regelmäßig verteilt sind auf den ersten Dynamikbereich (0-$Lmax_1$), so dass die erste Lichtwiederherstellungseinheit (V1) den ersten Dynamikbereich mit Luminanzschritten abdeckt, die im wesentlichen gleich einem ersten Schrittwert ($Lmax_1/2^{c1}$) sind.

**23.** Vorrichtung nach einem der Ansprüche 15 bis 22, **dadurch gekennzeichnet, dass** der zweite Satz Luminanzwerte umfasst, die regelmäßig verteilt sind auf den zweiten Dynamikbereich (0-$Lmax_2$), so dass die zweite Lichtwiederherstellungseinheit (V2) den zweiten Dynamikbereich mit Luminanzschritten abdeckt, die im wesentlichen gleich einem zweiten Schrittwert ($Lmax_2/2^{c2}$) sind.

**24.** Vorrichtung nach einem der Ansprüche 22 oder 23, **dadurch gekennzeichnet, dass** der zweite Schrittwert ($Lmax_2/2^{c2}$) kleiner ist als der erste Schrittwert ($Lmax_1/2^{c1}$).

**25.** Vorrichtung nach einem der Ansprüche 17 bis 24, **dadurch gekennzeichnet, dass** N den Wert sechzehn (N=16) hat und q den Wert acht hat (q=8).

**26.** Vorrichtung nach einem der Ansprüche 15 bis 25, **dadurch gekennzeichnet, dass** sie einen Schirm (20) umfasst, und die erste (V1) und zweite (V2) Lichtwiederherstellungseinheit angeordnet sind, um gleichzeitig das erste ($S_1$) und zweite ($S_2$) Leuchtsignal auf den Schirm (20) zu projizieren, so dass das dritte Leuchtsignal ($S_{1+2}$) durch ihre optische Lagerung auf dem Schirm (20) erhalten wird.

**27.** Vorrichtung nach einem der Ansprüche 15 bis 25 **dadurch gekennzeichnet, dass** sie eine Ausgangsoptik (OS, Figur 4) umfasst, und Mittel zum Kolimieren des ersten ($S_1$) und zweiten ($S_2$) Leuchtsignals auf die Ausgangsoptik.

**28.** Vorrichtung nach einem der Ansprüche 15 bis 27, **dadurch gekennzeichnet, dass** sie Mittel zum Regeln der Überlagerung der Bilder umfasst, die von der ersten (V1) bzw. zweiten (V2) Bildwiederherstellungseinheit erzeugt werden.

**29.** Vorrichtung nach einem der Ansprüche 15 bis 28, **dadurch gekennzeichnet, dass** sie Mittel zum Korrigieren von Luminanzeinheitlichkeitsfehlern der Lichtwiederherstellungseinheiten (V1, V2) umfasst.

**30.** Vorrichtung nach einem der Ansprüche 15 bis 29, **dadurch gekennzeichnet, dass** sie Mittel zur Korrektur der Geometriedeformierungsfehler und der Einstellung de Lichtwiederherstellungseinheiten (V1, V2) umfasst.

**31.** Vorrichtung nach einem der Ansprüche 15 bis 30, **dadurch gekennzeichnet, dass** sie Mittel umfasst, um die an die Lichtwiederherstellungseinheiten (V1, V2) anzulegenden Befehle zu bestimmen, als Funktion der kolorimetrischen Koordinaten des wiederherzustellenden Leuchtsignals, um die Auswirkung von Nichtlinearitäten der Vorrichtung zu kompensieren.

**32.** Vorrichtung nach Anspruch 31, **dadurch gekennzeichnet, dass** die Mittel eine Umwandlungstabelle (XYZ_TO_RVB) umfassen, welche mit Werten kolorimetrischer Koordinaten in einem bestimmten kolorimetrischen System des wiederherzustellenden Leuchtsignals Befehle ($C_{R1}$, $C_{V1}$, $C_{B1}$; $C_{R2}$, $C_{V2}$, $C_{B2}$) in Beziehung setzt, die an die Lichtwiederherstellungseinheiten (V1; V2) anzulegen sind.

**33.** Vorrichtung nach Anspruch 32, **dadurch gekennzeichnet, dass** die Umwandlungstabelle erhalten wird durch Inversion einer Kalibrierungstabelle (RVB_TO_XYZ), die für eine bestimmte Zahl bestimmter Befehle die kolorimetrischen Koordinaten im bestimmten kolorimetrischen System in Beziehung setzt, von dem Signal, welches durch die Lichtwiederherstellungseinheiten (V1, V2) wiederhergestellt wird, wenn die Befehle an diese angelegt werden.

**34.** Vorrichtung nach einem der Ansprüche 15 bis 33, **dadurch gekennzeichnet, dass** der Schirm vom Fresnel-Linsen-Typ ist.

**Claims**

**1.** A method of reproducing a light signal from digital data defining at least one colorimetric coordinate of the light signal in a particular colorimetric system, each colorimetric coordinate being encoded over N data bits and corresponding to a brightness value ($L_0$) associated with a particular component of the light signal in the colorimetric system, **characterized in that** it comprises the steps consisting in:

a) processing said N data bits so as to generate a first light signal, by means of a first light reproduction unit (V1) which can produce brightness values in a first set of discrete values covering a first dynamic brightness range (0 - $L_{max1}$);

b) processing said N data bits so as to generate at least a second light signal, by means of a second light reproduction unit (V2) which can produce brightness values in a second set of discrete values covering a second dynamic brightness range (0 - $L_{max2}$), less than said first dynamic brightness range (0 - $L_{max1}$), the second light reproduction unit having a brightness resolution which is finer than the first light reproduction unit;

c) generating a third light signal obtained by superimposing said first and second light signals.

**2.** The method as claimed in claim 1, **characterized in that** the second dynamic range (0 - $L_{max2}$) corresponds substantially to the brightness resolution of the first light reproduction unit (V1).

**3.** The method as claimed in one of the preceding claims, **characterized in that** the first light signal ($S_1$) generated by the first light reproduction unit (V1) in step a) has a brightness value ($L_1$) defined as being the brightness value of said first set which is just less than said particular brightness value ($L_0$).

**4.** The method as claimed in claim 3, **characterized in that** the second light signal ($S_2$) generated by the second light reproduction unit (V2) in step b) has a brightness value defined as being the brightness value of said second set which is just less than, or closest to the difference ($L_{r1}$) between said particular brightness value ($L_0$) and said brightness value ($L_1$) of said first set which is just less than said particular brightness value ($L_0$).

**5.** The method as claimed in one of the preceding claims, **characterized in that** step a) consists in generating a command ($C_{G1}$) for the first light reproduction unit (V1) encoded over q bits and step b) consists in generating a command ($C_{G2}$) of the second light reproduction unit (V1) encoded over N - q bits where q is an integer such that $1 \le q < N - 1$.

**6.** The method as claimed in claim 5, **characterized in that** the maximum light flux of the first light reproduction unit is K times higher than that of the second light reproduction unit, where $K = 2^q$.

**7.** The method as claimed in claim 5, **characterized in that** the first set comprises $2^q$ discrete values and **in that** the second set comprises $2^{N-q}$ discrete values.

**8.** The method as claimed in one of the preceding claims, **characterized in that** the first set comprises brightness values which are regularly distributed over the first dynamic range (0 - $L_{max1}$), such that the first light reproduction unit covers the first dynamic range with brightness steps which are substantially equal to a first step value ($L_{max1}/2^{c1}$).

**9.** The method as claimed in one of the preceding claims, **characterized in that** the second set comprises brightness values regularly distributed over the second dynamic range (0 - $L_{max2}$) such that the second light reproduction unit covers the second dynamic range with brightness steps which are substantially equal to a second step value ($L_{max2}/2^{c2}$).

**10.** The method as claimed in claims 8 and 9, **characterized in that** the second step value ($L_{max2}/2^{c2}$) is less than the first step value ($L_{max1}/2^{c1}$).

**11.** The method as claimed in one of claims 5 to 10, **characterized in that** the value of N is sixteen (N = 16) and **in that** the value of q is eight (q = 8).

**12.** The method as claimed in one of the preceding claims, **characterized in that** step c) is carried out by optical superposition of the first ($S_1$) and second ($S_2$) light signals projected onto a screen (20).

**13.** The method as claimed in one of the preceding claims, **characterized in that** step c) is carried out by optical superposition of the first ($S_1$) and second ($S_2$) light signals before projection onto a screen (20).

**14.** The method as claimed in any one of the preceding claims, **characterized in that**, the colorimetric system being the trichromatic Red, Green, Blue system, steps a) to c) are executed for each of the three components (R, G, B) of the light signal in this colorimetric system.

**15.** A device for reproducing a light signal from digital data defining at least one colorimetric coordinate of the light signal in a particular colorimetric system, each colorimetric coordinate being encoded over N data bits and corresponding to a brightness value ($L_0$) associated with a particular component of the light signal in the colorimetric system, **characterized in that** it comprises:

- a first light reproduction unit (V1) which can produce brightness values in a first set of discrete values covering a first dynamic brightness range (0- $L_{max1}$);
- at least a second light reproduction unit (V2) which can produce brightness values in a second set of discrete values covering a second dynamic brightness range (0 - $L_{max2}$), less than said first dynamic brightness range (0 - $L_{max1}$), the second light reproduction unit (V2) having a brightness resolution which is finer than the first light reproduction unit (V1);
- management means (10) to control said first (V1) and second (V2) light reproduction units as a function of said N data bits so that they produce a first ($S_1$) and a second ($S_2$) light signal, respectively, said first (V1) and second (V2) light reproduction units furthermore being arranged to produce a third light signal ($S_1 + S_2$) obtained by superimposing said first ($S_1$) and second ($S_2$) light signals.

**16.** The device as claimed in claim 15, **characterized in that** the second dynamic range (0 - $L_{max2}$) corresponds substantially to the brightness resolution of the first light reproduction unit (V1).

**17.** The device as claimed in one of claims 15 or 16, **characterized in that** the management means (10) deliver a command (C(V1)) to the first light reproduction unit (V1) encoded over q bits and a command (C(V2)) to the second light reproduction unit (V1) encoded over N - q bits, where q is an integer such that $1 \le q < N - 1$.

**18.** The device as claimed in one of claims 15 to 17, **characterized in that** the second light reproduction unit (V2) presents a maximum light flux (F2) which is K times smaller than that (F1) of the first light reproduction unit (V1).

**19.** The device as claimed in claim 18, **characterized in that** the second light reproduction unit (V2) presents a nominal maximum flux equal to that of the first light reproduction unit (V1), but is coupled to filtering means (F) making it possible to reduce the maximum flux that it can generate by a factor equal to K.

**20.** The device as claimed in claims 17 and 18 or according to claims 17 and 19, **characterized in that** $K = 2^q$

**21.** The method as claimed in 17, **characterized in that** the first set comprises $2^q$ discrete values and **in that** the second set comprises $2^{N-q}$ discrete values.

**22.** The device as claimed in one of claims 15 to 21, **characterized in that** the first set comprises brightness values which are regularly distributed over the first dynamic range (0 - $L_{max1}$), such that the first light reproduction unit (V1) covers the first dynamic range with brightness steps which are substantially equal to a first step value ($L_{max1}/2^{c_1}$).

**23.** The device as claimed in one of claims 15 to 22, **characterized in that** the second set comprises brightness values which are regularly distributed over the second dynamic range (0 - $L_{max2}$) such that the second light reproduction unit (V2) covers the second dynamic range with brightness steps which are substantially equal to a second step value ($L_{max2}/2^{c_2}$).

**24.** The device as claimed in claims 22 and 23, **characterized in that** the second step value ($L_{max2}/2^{c_2}$) is less than said first step value ($L_{max1}/2^{c_1}$).

**25.** The device as claimed in one of claims 17 to 24, **characterized in that** the value of N is sixteen (N = 16) and **in that** the value of q is eight (q = 8).

**26.** The device as claimed in one of claims 15 to 25, **characterized in that** it comprises a screen (20) and **in that** the first (V1) and second (V2) light reproduction units are arranged in order to project simultaneously the first ($S_1$) and second ($S_2$) light signals onto said screen (20) such that the third light signal ($S_{1+2}$) is obtained by their optical superposition on said screen (20).

**27.** The device as claimed in one of claims 15 to 25, **characterized in that** it comprises output optics (OS, figure 4) and means to collimate the first ($S_1$) and second ($S_2$) light signals onto said output optics.

**28.** The device as claimed in one of claims 15 to 27, **characterized in that** it comprises means for adjusting the superposition of the images generated by the first (V1) and by the second (V2) image reproduction unit, respectively.

**29.** The device as claimed in one of claims 15 to 28, **characterized in that** it comprises means of correcting brightness uniformity defects of the light reproduction units (V1, V2).

**30.** The device as claimed in one of claims 15 to 29, **characterized in that** it comprises means of correcting geometrical distortion defects and of setting the light reproduction units (V1, V2).

**31.** The device as claimed in one of claims 15 to 30, **characterized in that** it comprises means to determine the commands to be applied to the light reproduction units (V1, V2), as a function of the colorimetric coordinates of the light signal to be reproduced, so as to compensate for the effect of the nonlinearities of the device.

**32.** The device as claimed in claim 31, **characterized in that** said means comprise a conversion table (XYZ_TO_RGB) which associates commands ($C_{R1}$, $C_{G1}$, $C_{B1}$, $C_{R2}$, $C_{G2}$, $C_{B2}$) to be applied to the light reproduction units (V1; V2) with the colorimetric coordinate values, in a particular colorimetric system, of the light signal to be reproduced.

**33.** The device as claimed in claim 32, **characterized in that** the conversion table is obtained by inverting a calibration table (RGB_TO_XYZ) which associates the colorimetric coordinates, in said particular colorimetric system, of the signal which is reproduced by the light reproduction units (V1, V2) when these commands are applied thereto, for a certain number of particular commands.

**34.** The device as claimed in one of claims 15 to 33, **characterized in that** the screen is of the Fresnel lens type.

FIG.1.

FIG.2a.

FIG.2b.

FIG.3.

FIG.4.

FIG.5.

FIG.6.

FIG.7a.

70

71

72

FIG.7b.

74  70

72

75

FIG.8.

$X_s, Y_s, Z_s$

CONVERSION 101

XYZ_TO_RVB

100

$c_{R1}, c_{V1}, c_{B1}$

GENERATION 102

$X_1 \ Y_1 \ Z_1$

+  103  −

$X_s', Y_s', Z_s'$

201

CONVERSION

200

XYZ_TO_RVB

$c_{R2} \ c_{V2} \ c_{B2}$

202

GENERATION

$X_2 \ Y_2 \ Z_2$